(19) Europäisches Patentamt
European Patent Office
Office européen des brevets

(11) EP 0 731 155 B1

(12) EUROPEAN PATENT SPECIFICATION

(45) Date of publication and mention of the grant of the patent:
**18.08.1999 Bulletin 1999/33**

(51) Int Cl.[6]: **C09K 19/46**, C09K 19/42, C09K 19/44

(21) Application number: **96103566.4**

(22) Date of filing: **07.03.1996**

(54) **A liquid crystal composition and a liquid crystal display element**

Flüssigkristallzusammensetzung und Flüssigkristallanzeigeelement

Composition liquide cristalline et élément d'affichage à cristaux liquides

(84) Designated Contracting States:
**DE FR GB**

(30) Priority: **08.03.1995 JP 7731095**

(43) Date of publication of application:
**11.09.1996 Bulletin 1996/37**

(73) Proprietor: **Chisso Corporation**
**Osaka-shi Osaka-fu (JP)**

(72) Inventors:
- **Sekiguchi, Yasuko**
  **Ichiharashi, Chibaken (JP)**
- **Hachiya, Norihisa**
  **Ichiharashi, Chibaken (JP)**
- **Nakagawa, Etsuo**
  **Ichiharashi, Chibaken (JP)**
- **Isoyama, Toyoshiro**
  **Chuoku, Chibachi, Chibaken (JP)**
- **Matsushita, Tetsuya**
  **Sodegaurashi, Chibaken (JP)**

(74) Representative:
**Hansen, Bernd, Dr. Dipl.-Chem. et al**
**Hoffmann Eitle,**
**Patent- und Rechtsanwälte,**
**Arabellastrasse 4**
**81925 München (DE)**

(56) References cited:
**EP-A- 0 219 975** **EP-A- 0 282 300**
**DE-A- 4 028 988**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

1. Field of the Invention

This invention relates to a nematic liquid crystal composition and a liquid crystal display element obtained by sealing a liquid crystal composition having added at least one kind of chiral compounds to the above liquid crystal composition, in a closed cell formed by two substrates provided with transparent electrodes. More particularly, the invention relates to a liquid crystal composition suitable to supertwisted birefringence (STN) mode and a liquid crystal display using the liquid crystal composition.

2. Description of the Related Art

As the display mode of liquid crystal display elements (LCD), twisted nematic (TN) mode, supertwisted birefringence (STN) mode, active matrix (AM-LCD) mode, etc. have been proposed and practically employed. Among these modes, supertwisted birefringence (STN) mode wherein the alignment of liquid crystal molecules in two sheets of substrates is twisted by 180° to 270°, proposed by T.J. Scheffer et al (Appl. Phy. Lett., 45 (10), 1021 (1984)), has been employed as LCD for personal computer, word processor, etc., and further, improvement of various characteristics has been required. For the liquid crystal composition used as the liquid crystal display element, the following characteristics have been sought:

(1) In order to enhance the contrast of the liquid crystal display element, the voltage-transmittance characteristic (steepness) should be steep.
(2) In order to decrease the change in the coloring due to the temperature-dependency, the phase transition points (clearing point) of nematic-isotropic phases should be high.
(3) In order to decrease the power consumption, the threshold voltage should be low.
(4) So as to be adaptable to change in the use environment, the temperature-dependency of the threshold voltage should be small.
(5) In order to make the time (τ) required for the electrooptical response as short as possible, the viscosity should be low.

In recent years, particularly, demand for LCD characterized by small type, lightweight and portability has been increasing. Since such LCD is restricted by a driving electric source, it is necessary for further lightweighing to make the electric source device smaller. Thus, LCD, too, should be driven under a lower voltage. In order to achieve a lower voltage drive, the threshold voltage of liquid crystal composition should be lowered and its temperature-dependency in the use environment should be reduced.
Thus, development of a liquid crystal composition having a low threshold voltage and a small temperature-dependency thereof has been earnestly desired.
Further, in recent years,LCD has come to be required to correspond to the moving image. In order to correspond to the moving image, the response time at the time of driving LCD should be shortened. Since the response time is proportional to the viscosity of liquid crystal composition, development of a liquid crystal composition having a low viscosity has also been earnestly desired.
However, although such a liquid crystal composition has been strenuously studied, it is the present status that improvement in the characteristics thereof has always been required. Japanese patent application laid-open No. Sho 62-63546 discloses a liquid crystal composition using a compound of the formula (I-1) mentioned below, but only a liquid crystal composition consisting of the compound of the formula (I-1) and p-(trans-4-alkylcyclohexyl)benzonitrile compounds is disclosed therein. This composition containing a compound having a nitrile group as in the compound of the formula (1), and has a large viscosity; hence it is not practical. In addition, the object of the present invention is to provide a liquid crystal composition having a small threshold voltage value, a small temperature dependency and a low viscosity, but the above publication does not disclose these problems at all.

Problem to be Solved by the Invention

The object of the present invention is to provide a liquid crystal composition satisfying various characteristics sought for STN display mode as described above and at the same time, having a low threshold voltage, a small temperature-dependency thereof, a low viscosity and a relatively high clearing point. Further, another object of the present invention is to provide a liquid crystal display element for STN display mode having the above characteristics well balanced.
The present inventors have made strenuous research in compositions using various compounds, in order to

solve the above problems, and as a result, have found that when the liquid crystal composition of the present invention is used for STN display element, the above object can be achieved.

SUMMARY OF THE INVENTION

An object of the present invention is attained by a LC composition described in the following item (1).

(1) A liquid crystal composition comprising as a first component, at least one member selected from the group consisting of compounds expressed by the following formula (I):

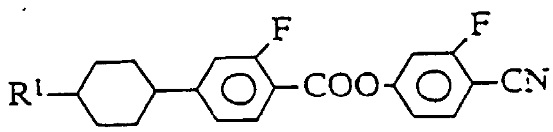

(I) ,

as a second component, at least one member selected from the group consisting of compounds expressed by the following formulas (II-a), (II-b), (II-c) or (II-d):

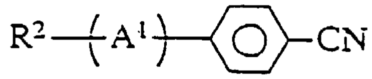

(II-a)

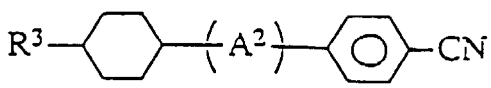

(II-b)

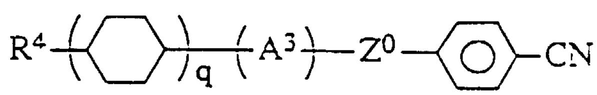

(II-c)

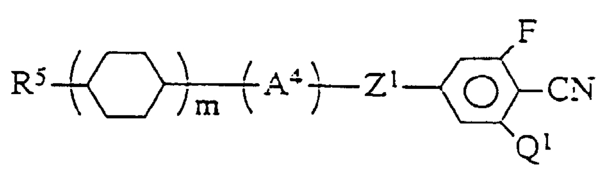

(II-d)

and as a third component, at least one member selected from the group consisting of compounds expressed by the following formulas (III) or (IV):

$$R^6\{B\}Z^2\{C\}R^7 \quad (III)$$

$$R^8\{D\}Z^3\{E\}Z^4\{G\}R^9 \quad (IV),$$

wherein, $R^1$, $R^2$, $R^3$, $R^4$, $R^5$ and $R^8$ each independently represent an alkyl group of 1 to 10 carbon atoms or alkenyl group of 2 to 10 carbon atoms; $R^6$ and $R^7$ each independently represent an alkyl group of 1 to 10 carbon atoms

or an alkenyl group of 2 to 8 carbon atoms, and in either of these groups, an optional one or two not-adjacent methylene groups may be replaced by oxygen atom(s); $R^9$ represents an alkyl group, alkoxy group or alkoxymethyl group of 1 to 10 carbon atoms; $Z^0$ represents -COO- or $-CH_2CH_2-$; $Z^1$ represents $-CH_2CH_2-$, -COO- or a single bond; $Q^1$ represents H or F; $A^1$ represents trans-1,4-cyclohexylene, 1,4-phenylene or 1,3-dioxane-2,5-diyl; $A^2$, $A^3$, $A^4$, C and G each independently represent trans-1,4-cyclohexylene or 1,4-phenylene; q and m each independently represent 0 or 1; B represents trans-1,4-cyclohexylene, pyrimidine-2,5-diyl or 1,4-phenylene; $Z^2$ represents -C≡C-, -COO-, $-CH_2CH_2-$, -CH=CH-, -CF=CF- or single bond; D represents trans-1,4-cyclohexylene or pyrimidine-2,5-diyl; E represents trans-1,4-cyclohexylene or 1,4-phenylene whose one H at the lateral position may be replaced by F; $Z^3$ represents $-CH_2CH_2-$ or a single bond; and $Z^4$ represents -C≡C-, -COO-, -CH=CH- or a single bond.

Embodiments of the present invention are recited in the following items (2) to (7):

(2) A liquid crystal composition according to item (1), wherein the mixing proportions of the first component, the second component and the third component are respectively 3 to 40%, 10 to 70% and 10 to 70%, based upon the total weight of the liquid crystal composition.

(3) A liquid crystal composition according to the item (1) or the item (2), further comprising as a fourth component, at least one member selected from the group consisting of compounds expressed by the forllowing formula (V) or formula (VI):

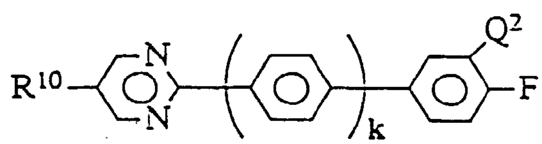

(V)

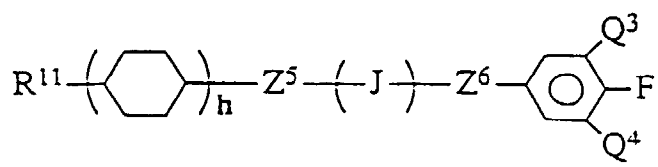

(VI)

wherein $R^{10}$ and $R^{11}$ each independently represent an alkyl group of 1 to 10 carbon atoms; $Q^2$, $Q^3$ and $Q^4$ each independently represent H or F; J represents trans-1,4-cyclohexylene or 1,4-phenylene; $Z^5$ and $Z^6$ each independently represent -COO- or a single bond; k represents 0 or 1; and h represents 0, 1 or 2.

(4) A liquid crystal composition according to item (3), wherein the mixing ratio of the fourth component is 0 to 50% based upon the total weight of the liquid crystal composition.

(5) A liquid crystal composition according to either one of the items (1) to (4), wherein $R^1$ represents an alkyl group of 1 to 10 carbon atoms in the formula (1).

(6) A liquid crystal composition according to either one of the items (1) to (5), wherein $R^6$ and $R^7$ each independently represent an alkyl group, an alkoxy group or an alkoxymethyl group each of 1 to 10 carbon atoms, in the formula (III).

(7) A liquid crystal composition according to either one of the items (1) to (6), wherein $R^8$ represents an alkyl group of 1 to 10 carbon atoms and $R^9$ represents an alkyl group or an alkoxy group of 1 to 10 carbon atoms, in the formula (IV).

Another object of the present invention is attained by

(8) A liquid crystal display element characterized by using a liquid crystal composition according to either one of the items (1) to (7).

## DETAILED DESCRIPTION OF THE INVENTION

Hereinafter, liquid crystal compounds as components constituting the liquid crystal composition of the present invention will be described.

As compounds expressed by the formula (I) as the first component of the composition of the present invention, compounds expressed by the following formula (I-1), those expressed by the following formula (I-2) and those expressed by the following formula (I-3) are preferably used:

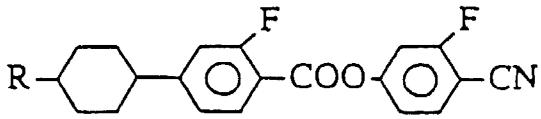

(I-1)

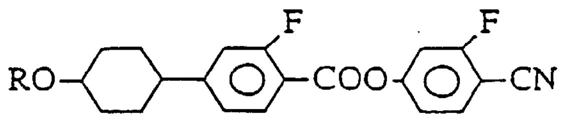

(I-2)

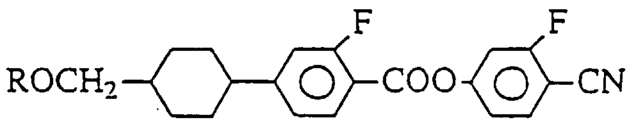

(I-3)

In these formulas, R represents an alkyl group or an alkenyl group.

Among these compounds, those of the formula (I-1) are particularly preferably used, because they have a low viscosity and a superior compatibility at low temperatures.

Since the compounds of the formula (I) have a positive dielectric anisotropy and its value is particularly large, the compounds are used mainly for lowering the threshold voltage of obtained nematic liquid crystal compositions and also for improving its temperature-dependency.

As the compounds expressed by the formulas (II-a), (II-b), (II-c) or (II-d), as the second component of the present invention, compounds expressed by the following respective formulas are preferable:

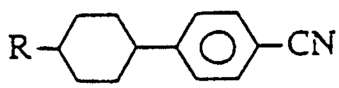

(II-a-1)

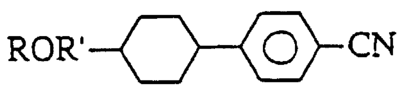

(II-a-2)

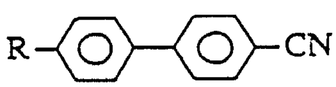

(II-a-3)

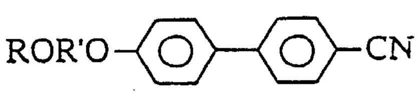

(II-a-4)

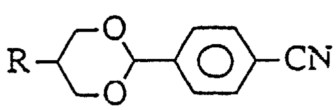

(II-a-5)

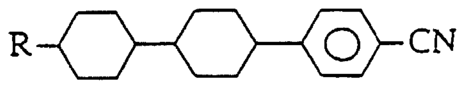

(Ⅱ-b-1)

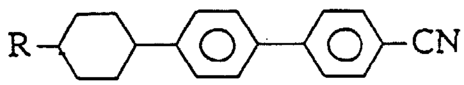

(Ⅱ-b-2)

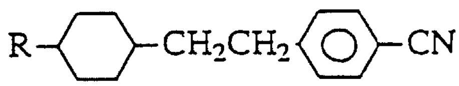

(Ⅱ-c-1)

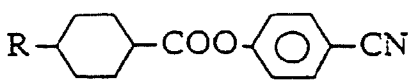

(Ⅱ-c-2)

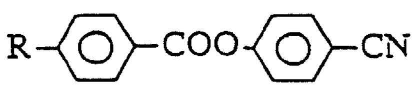

(Ⅱ-c-3)

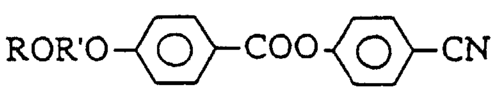

(Ⅱ-c-4)

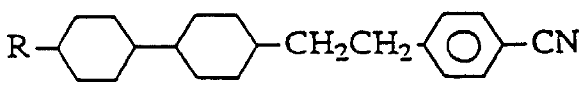

(Ⅱ-c-5)

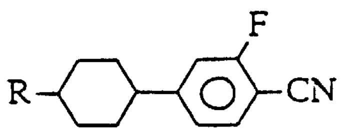

(Ⅱ-d-1)

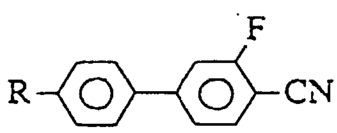

(Ⅱ-d-2)

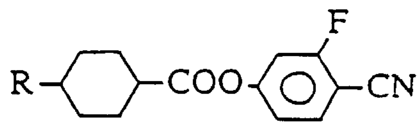

(II-d-3)

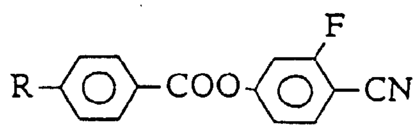

(II-d-4)

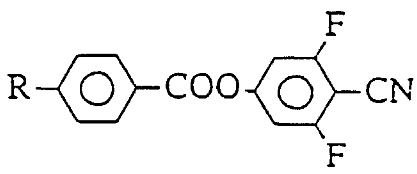

(II-d-5)

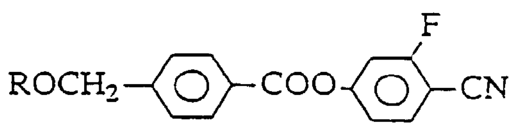

(II-d-6)

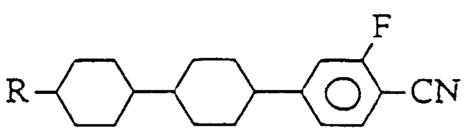

(II-d-7)

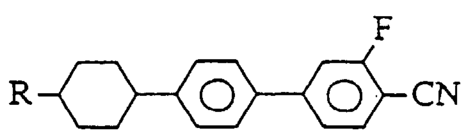

(II-d-8)

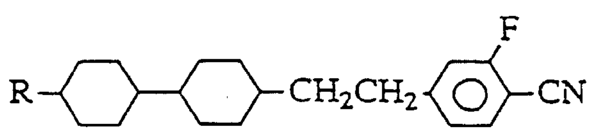

(II-d-9)

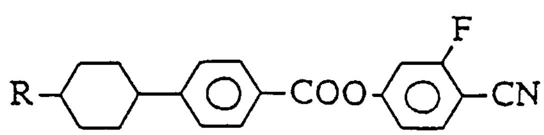

(II-d-10)

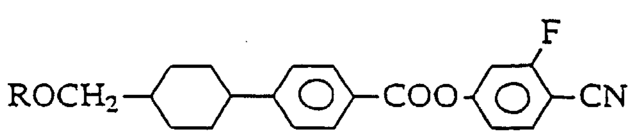

(II-d-11)

In the above formulas, R represents an alkyl group or alkenyl group, and R' represents an alkandiyl group or

an alkendiyl group.

Among these compounds, those expressed by the following formulas (II-a-1), (II-a-2), (II-a-3), (II-a-5) (II-b-1), (II-b-2), (II-c-1), (II-d-1), (II-d-4), (II-d-5), (II-d-6), (II-d-7), (II-d-10) or (II-d-11) are particularly preferably used in the present invention.

The compounds of the second component expressed by the formula (II-a), (II-b), (II-c) or (II-d) have a positive dielectric anisotropy and the value is particularly large. These compounds are used mainly for lowering the threshold voltage of the resulting liquid crystal composition and also for improving the steepness of the curve of impressed voltage-transmission in the electro-optical response.

As the compounds expressed by the formula (III) or (IV), as the third component, compounds expressed by the following formulas are preferably used:

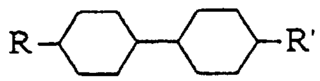
(III-1)

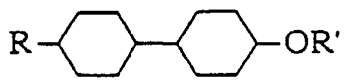
(III-2)

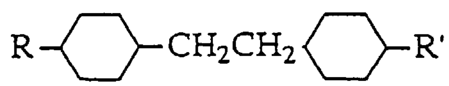
(III-3)

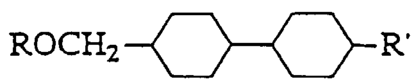
(III-4)

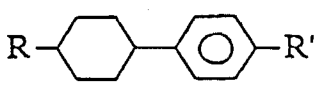
(III-5)

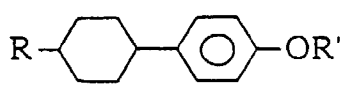
(III-6)

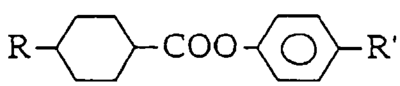
(III-7)

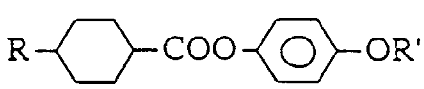
(III-8)

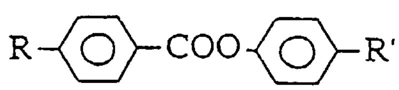
(III-9)

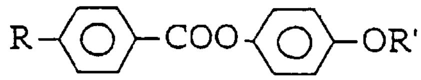

(Ⅲ-10)

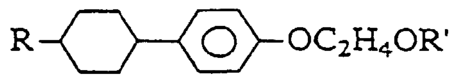

(Ⅲ-11)

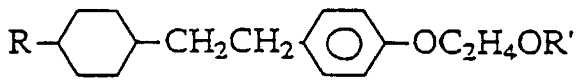

(Ⅲ-12)

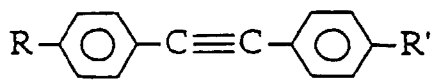

(Ⅲ-13)

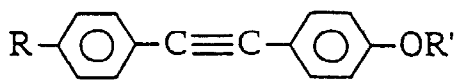

(Ⅲ-14)

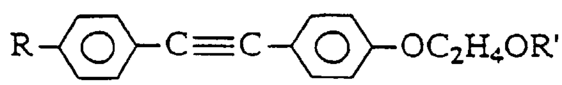

(Ⅲ-15)

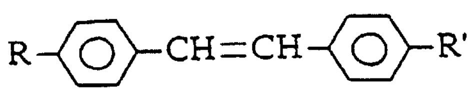

(Ⅲ-16)

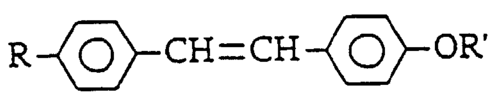

(Ⅲ-17)

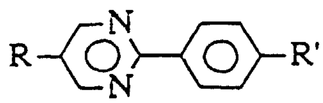

(Ⅲ-18)

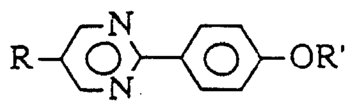

(Ⅲ-19)

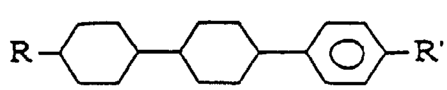

(Ⅳ-1)

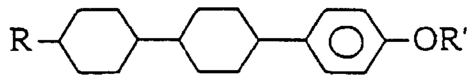

(IV-2)

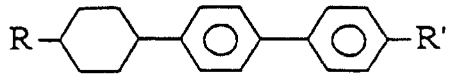

(IV-3)

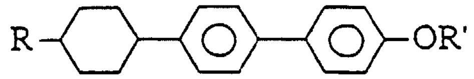

(IV-4)

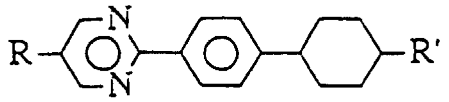

(IV-5)

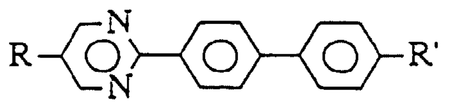

(IV-6)

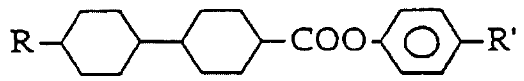

(IV-7)

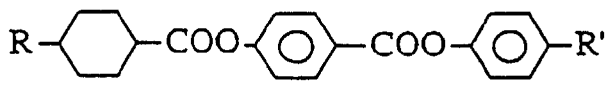

(IV-8)

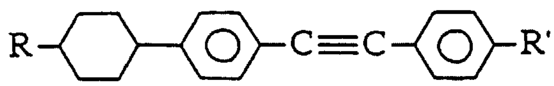

(IV-9)

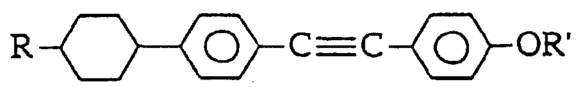

(IV-10)

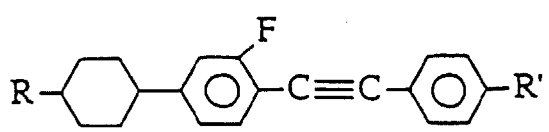

(IV-11)

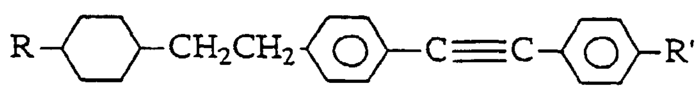

(IV-12)

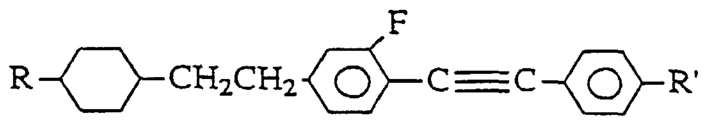

(IV-13)

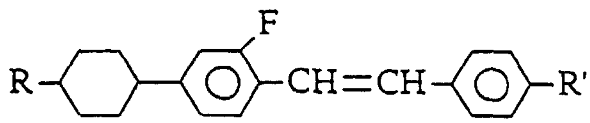

(IV-14)

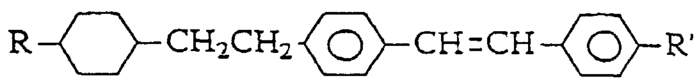

(IV-15)

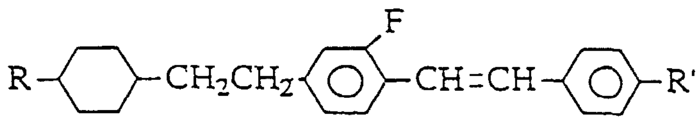

(IV-16)

In these formulas, R and R' each independently represent an alkyl group or an alkenyl group.

Among the compounds of the third component, as the compounds expressed by the formula (III), those expressed by the formula (III-1), (III-2), (III-4), (III-5), (III-6), (III-7), (III-8), (III-13), (III-14), (III-18) or (III-19) are particularly preferably used in the present invention. Further, as the compounds expressed by the formula (IV), those expressed by the formula (IV-1), (IV-2), (IV-5), (IV-9), (IV-11), (IV-12), (IV-14) or (IV-15) are particularly preferably used.

The compounds of the formulas (III) and (IV) have a negative or weakly positive dielectric anisotropy. The compounds of the formula (III) are used mainly for lowering the viscosity of the resulting liquid crystal composition, and/or for adjusting its $\Delta n$.

Further, the compounds of the formula (IV) are used for elevating the clearing point of the resulting composition to thereby broaden its nematic range, and/or for adjusting its $\Delta n$ and for adjusting its viscosity.

As preferable examples of the compounds expressed by the formula (V) or (VI) of the present invention, those expressed by the following formulas are mentioned:

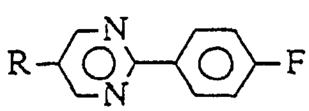

(V-1)

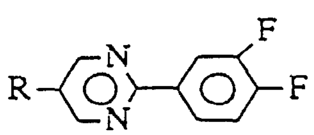

(V-2)

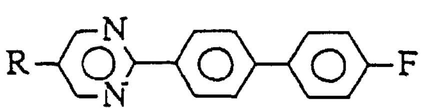

(V-3)

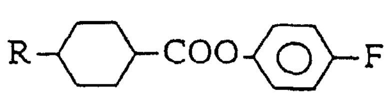

(VI-1)

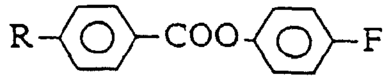

(Ⅵ-2)

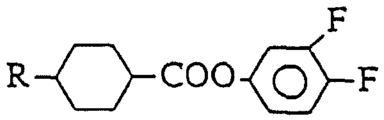

(Ⅵ-3)

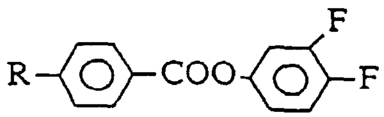

(Ⅵ-4)

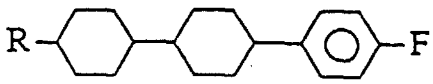

(Ⅵ-5)

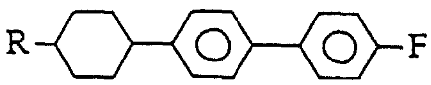

(Ⅵ-6)

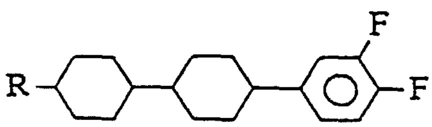

(Ⅵ-7)

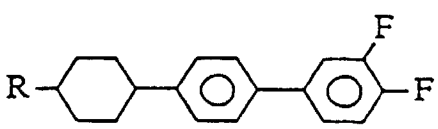

(Ⅵ-8)

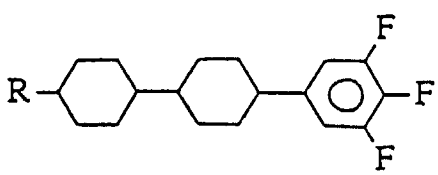

(Ⅵ-9)

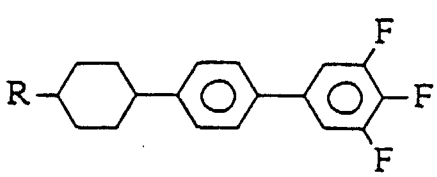

(Ⅵ-10)

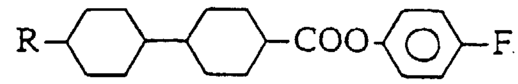

(VI-11)

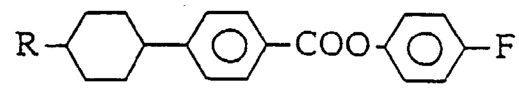

(VI-12)

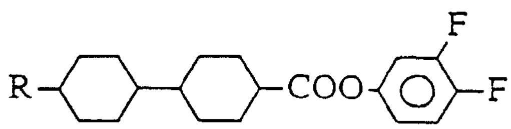

(VI-13)

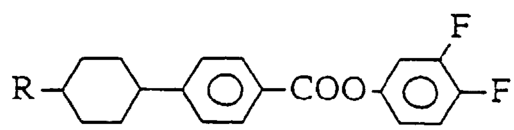

(VI-14)

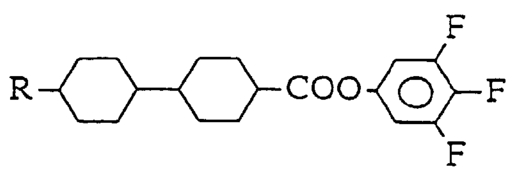

(VI-15)

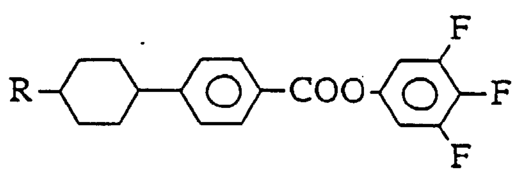

(VI-16)

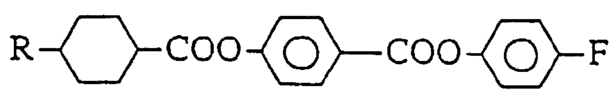

(VI-17)

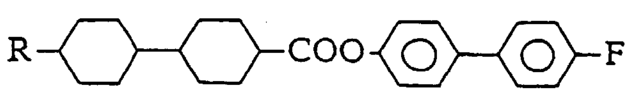

(VI-18)

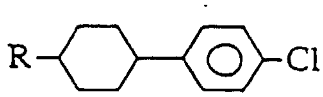

(VI-19)

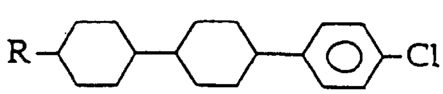

(VI-20)

In these formulas, R represents an alkyl group.

As the compounds expressed by the formula (V), those expressed by the formula (V-1), (V-2) or (V-3) are particularly preferably used in the present invention. Further, as the compounds expressed by the formula (VI), those expressed by the formula (VI-1), (VI-5), (VI-6), (VI-7), (VI-8), (VI-9), (VI-10), (VI-11), (VI-12), (VI-13), (VI-14), (VI-15), (VI-16) or (VI-18) are particularly preferably used in the present invention.

The compounds expressed by the formula (V) or (VI) have a positive dielectric anisotropy, and are used particularly for lowering the threshold voltage of the resulting liquid crystal composition and for improving the temperature-dependency of the threshold voltage. Further, these compounds are used also for adjusting the viscosity of the resulting composition, adjusting its Δn, and elevating its clearing point to thereby broaden its nematic range.

The mixing proportion of the first component in the resulting composition is preferably 3 to 40% based upon the total weight of the liquid crystal composition. It is more preferably 5 to 30%. If the mixing proportion of the first component is less than 3% by weight based upon the total weight of the resulting composition, the full effectiveness of lowering the threshold voltage and decreasing its temperature-dependency, aimed in the present invention may often be unobtainable. If the mixing proportion of the first component exceeds 40% by weight, the viscosity of the resulting liquid crystal composition often increases; hence such a proportion is undesirable.

The mixing proportion of the second component is preferably 10 to 70%, more preferably 10 to 60% based upon the total weight of the resulting composition. If the mixing proportion of the second component is less than 10%, the threshold voltage of the resulting composition often increases; hence such a proportion is undesirable.

If the mixing proportion of the second component exceeds 60% by weight, the viscosity of the liquid crystal composition often increases; hence such a proportion is undesirable.

The mixing proportion of the third component based upon the total weight of the composition is preferably 10 to 70%, more preferably 15 to 60%.

If the mixing proportion of the third component is less than 10% by weight, the viscosity of the resulting liquid crystal composition often increases; hence such a proportion is undesirable. If the mixing proportion of the third component exceeds 70% by weight, the threshold voltage of the resulting liquid crystal composition often increases; hence such a proportion is undesirable.

If a fourth component is used in the present invention, it is preferable to use it in a mixing proportion of 50% or less, based upon the total weight of the resulting composition and the proportion is more preferably 40% or less.

In accordance with the object of a liquid crystal display element employing the liquid crystal composition of the present invention, the present composition can contain other compounds besides the compounds of the above formulas (I) to (VI), in a suitable quantity within a range wherein the object of the present invention is not damaged, in order to adjust a threshold voltage, a nematic range, a Δn, a dielectric anisotropy, a viscosity, etc. of the resulting liquid crystal composition. As examples of such compounds, the following compounds can be mentioned:

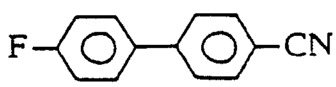

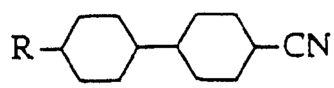

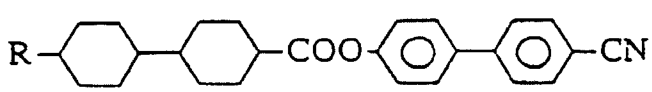

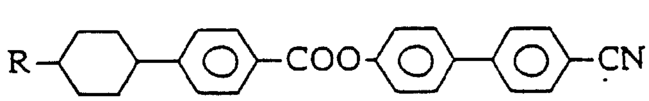

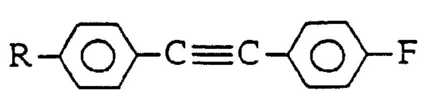

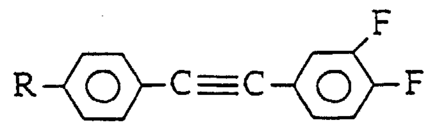

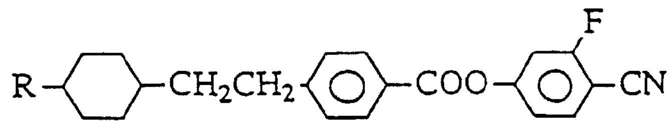

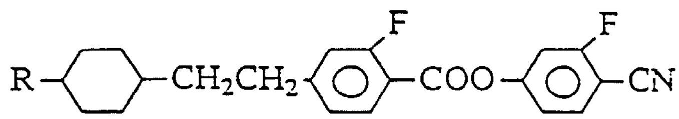

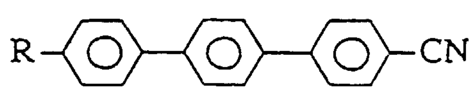

In these formulas, R represents an alkyl group of 1 to 10 carbon atoms.

The liquid crystal composition of the present invention is prepared according to a process which is itself conventional. Usually, a process has been employed, wherein various component compounds are dissolved and mixed with each other at a temperature higher than clearing point.

Further, the liquid crystal composition used in the display element of the present invention is improved by adding a suitable additive, so as to correspond to the aimed use application. Such an additive has been well known by a person of ordinary skill in the art and has been described in details in literatures, etc. Usually, as such an additive, mentioned are a chiral dopant which induces the helical structure of liquid crystals to adjust necessary twist angle to prevent the reverse twist, and a dichroic dye such as mellocyanine group, styryl group, azo group, azomethine group, azoxy group, quinophthalone group, anthraquinone group, tetrazine group, etc. used also in a liquid crystal composition for guest-host (GH) mode.

The liquid crystal composition of the present invention can be used as a liquid crystal material for a polymer-dispersion type liquid crystal display element (PDLCD) represented by NCAP prepared by micro-encapsulating nematic liquid crystals or polymer network liquid crystal display element (PNLCD) prepared by forming three-dimensional reticulated high molecules in liquid crystals. Besides, the composition can also be used as liquid crystal materials for an electrically controlled birefringence (ECB) mode or dynamic scattering (DS) mode.

Preferable embodiments of the present invention will be shown in the following items (i) to (iv):

(i) A liquid crystal composition comprising
as the first component,
at least one member of compounds expressed by the above formula (I-1);
as the second component,
at least one member selected from the group consisting of compounds expressed by the above formulas,
(II-a-1), (II-a-2), (II-a-3), (II-a-4), (II-a-5), (II-b-1), (II-b-2), (II-c-1), (II-c-3), (II-d-1), (II-d-4), (II-d-5), (II-d-6), (II-d-7), (II-d-10) or (II-d-11), and
as the third component,
at least one member selected from the group consisting of compounds expressed by the above formulas,
(III-1), (III-2), (III-4), (III-5), (III-6), (III-7), (III-8), (III-13), (III-14), (III-18), (III-19), (IV-1), (IV-2), (IV-5), (IV-6), (IV-11), IV-12), (IV-14) or (IV-15),
the above first, second and third components being respectively contained in a quantity of 5 to 30%, 10 to 60% and 15 to 60% based upon the total weight of the resulting composition,

(ii) a liquid crystal composition as set forth in item (i), further comprising as a fourth component besides the above first component, second component and third component, at least one member selected from the group consisting of compounds expressed by the above formulas
(V-1), (V-2), (V-3), (VI-1), (VI-5), (VI-6) (VI-7), (VI-8), (VI-9), (VI-10), (VI-11), (VI-12), (VI-13), (VI-14), (VI-15),

(VI-16), (VI-17) or (VI-18),
the fourth component being contained in a quantity of 40% or less, based upon the total weight of the resulting composition,
(iii) a liquid crystal composition comprising
as the first component, at least one member of compounds expressed by the above formula (I-1),
as the second component, at least one member selected from the group consisting of compounds expressed by the above formuas (II-a-1), (II-a-2), (II-a-3), (II-a-5), (II-b-1), (II-d-1) or (II-d-6), and
as the third component, at least one member selected from the group consisting of compounds expressed by the above formulas (III-1), (III-4), (III-6), (III-8), (III-13), (III-14), (IV-1), (IV-2), (IV-5), (IV-6), (IV-12) or (IV-14),
the above first, second and third components being respectively contained in a quantity of 5 to 30%, 20 to 60% and 30 to 50%, based upon the total weight of the resulting composition, and
(iv) a liquid crystal composition comprising
as the first component, at least one member of compounds expressed by the above formula (I-1), as the second component, at least one member selected from the group consisting of compounds expressed by the above formulas,
(II-a-1), (II-a-3), (II-a-4), (II-a-5), (II-b-1), (II-d-1), (II-d-5) or (II-d-6),
as the third component, at least one member selected from the group consisting of compounds expressed by the above formulas
(III-1), (III-2), (III-4), (III-5), (III-6), (III-8), (III-13), (III-18), (III-19), (IV-1), (IV-2), (IV-11) or (IV-12), and
as the fourth component, at least one member selected from the group consisting of compounds expressed by the above formulas
(V-1), (V-2), (V-3), (VI-1), (VI-5), (VI-6), (VI-7), (VI-8), (VI-9), (VI-11), (VI-12) or (VI-17),
the above first, second, third and fourth components being respectively contained in a quantity of 5 to 20%, 10 to 50%, 15 to 60% and 4 to 40%, based upon the total weight of the resulting composition.

Examples

The present invention will be described in more detail by way of Examples and Comparative examples, but it should not be construed to be limited thereto. Further, the composition ratios in these examples are all expressed by % by weight.

In addition, the threshold voltage is expressed by the voltage, $V_{10}$ at which the transmission in the normal direction to the substrate surfaces of the liquid crystal element in the electrooptical response has reached 10% of the saturated value.

Further, the temperature-dependency δ of the threshold voltage is defined by the following equation: δ

$$\delta = \frac{V_{10}(0°C) - V_{10}(50°C)}{[V_{10}(0°C) + V_{10}(50°C)]/2} \times \frac{100}{50°C - 0°C} (\%/°C)$$

In this equation, $V_{10}$ (0°C) and $V_{10}$ (50°C) each refer to the threshold voltages at 0°C and 50°C.

Comparative example 1

A nematic composition having the following composition was prepared:

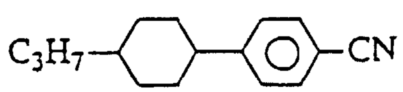 30%

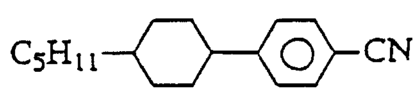 40%

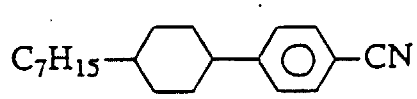 30%

This composition exhibited a clearing point of 52.1°C, a viscosity at 20°C of 21.7 mPa·s, an optical anisotropy

at 25°C of 0.119, a dielectric anisotropy at 20°C of 11.2, a threshold voltage at 20°C of 1.60V and a temperature-dependency (δ) of the threshold voltage of 0.63%/°C.

Comparative example 2

The following composition containing compounds included in the formula (I) of the present invention was prepared:

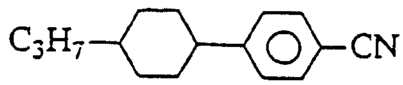

25.5%

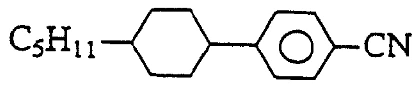

34%

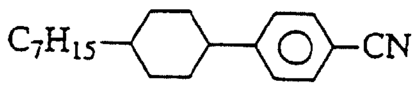

25.5%

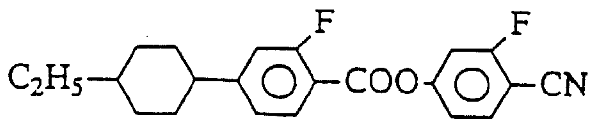

15%

This liquid crystal composition corresponds to that disclosed in Example 30 of Japanese patent application laid-open No. Sho 62-63546.

This composition exhibited a clearing point ($T_{NI}$) of 59.0°C, a viscosity at 20°C ($\eta_{20}$) of 32.0 mPa·s, an optical anisotropy ($\Delta n$) at 25°C of 0.124, a dielectric anisotropy ($\Delta\varepsilon$) at 20°C of 14.0, a threshold voltage at 20°C ($V_{10}$) of 1.24 (V), and a temperature-dependency (δ) of the threshold voltage 0.56%/°C.

Example 1

A liquid crystal composition having the following composition was prepared:

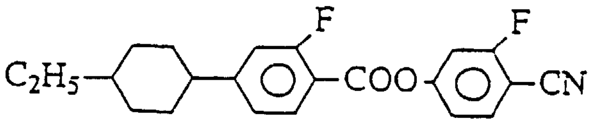

7%

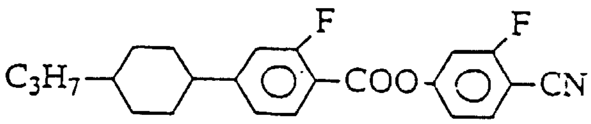

7%

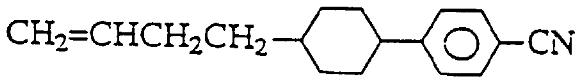

10%

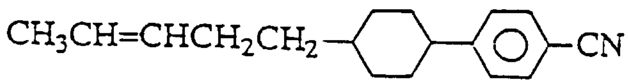

10%

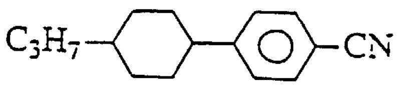

15%

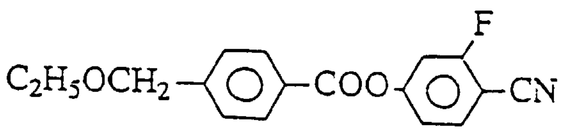

5%

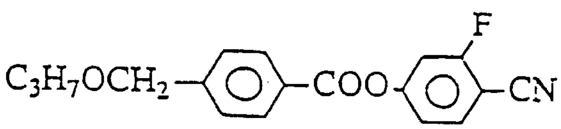

5%

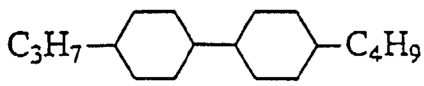

10%

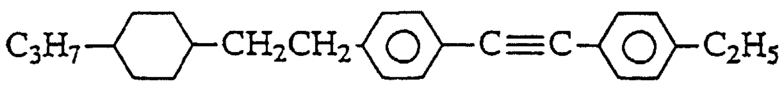

4%

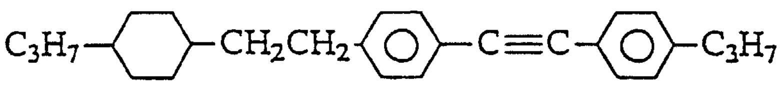

4%

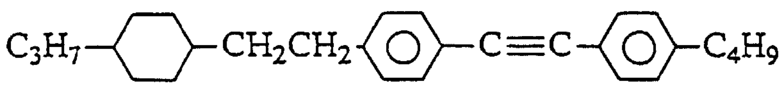

4%

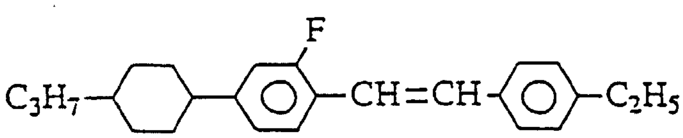

4%

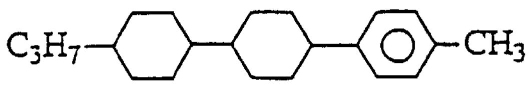

7%

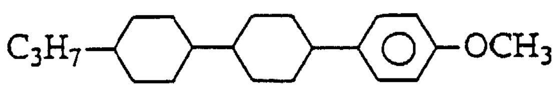

4%

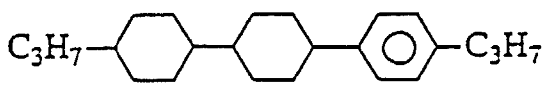

4%

This composition exhibited a clearing point of 95.8°C, a viscosity at 20°C of 26.3 mPa·s, an optical anisotropy at 25°C of 0.145, a dielectric anisotropy at 20°C of 14.8, a threshold voltage at 20°C of 1.50 V, and a temperature-dependency of the threshold voltage of 0.23%/°C.

As compared with Comparative example 1, the threshold voltage lowered, and as compared with the composition of Comparative example 2, the viscosity lowered. Further, as compared with the two Comparative examples, the clearing point increased and the temperature-dependency of the threshold voltage decreased.

Example 2

A liquid crystal composition having the following composition was prepared:

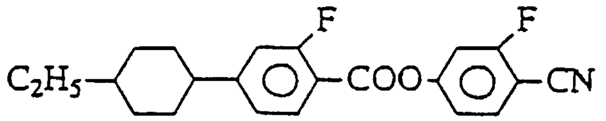 8%

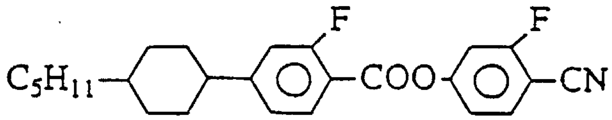 8%

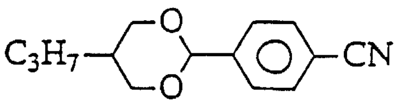 10%

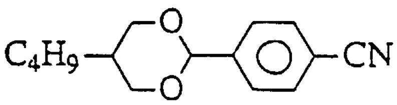 10%

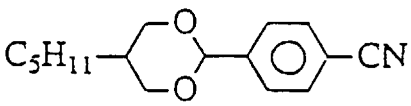 4.4%

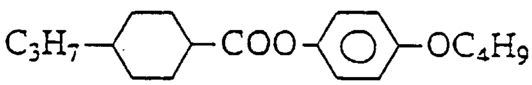 3.2%

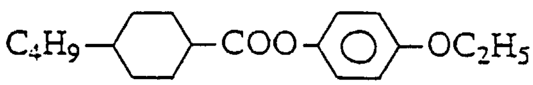 2.4%

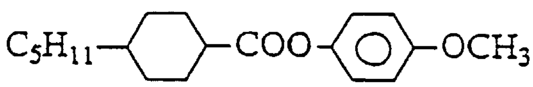 2.4%

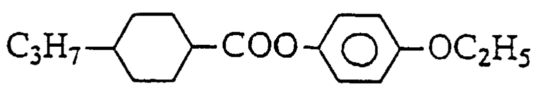 2.0%

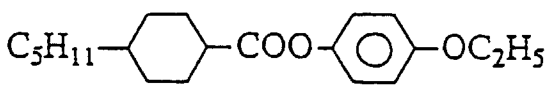 1.6%

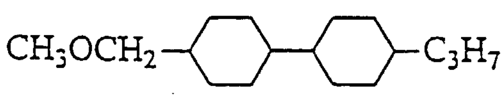 7%

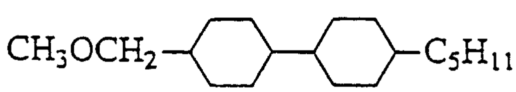 10%

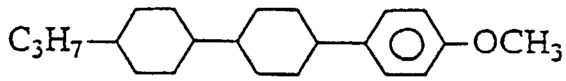 5%

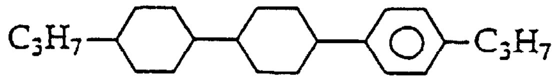 8%

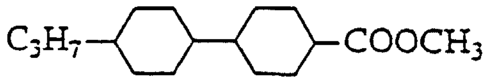 10%

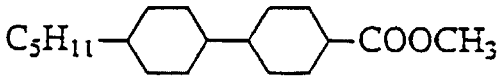 8%

This composition exhibited a clearing point of 79.3°C, a viscosity at 20°C of 25.8 mPa·s, an optical anisotropy at 25°C of 0.087, a dielectric anisotropy at 20°C of 10.0, a threshold voltage at 20°C of 1.48 V, and a temperature-dependency of the threshold voltage of 0.38%/°C.

As compared with Comparative exmaple 1, the threshold voltage lowered, and as compared with the composition of Comparative example 2, the viscosity lowered. Further, as compared with the two Comparative examples, the clearing point increased and the temperature-dependency of the threshold voltage decreased.

Example 3

A liquid crystal composition having the following composition was prepared:

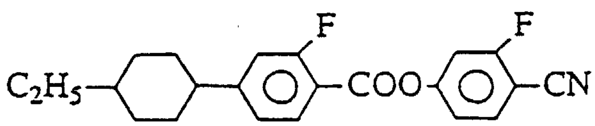 5%

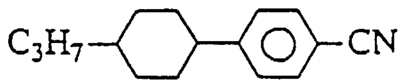 20%

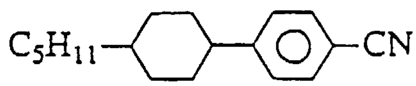 8%

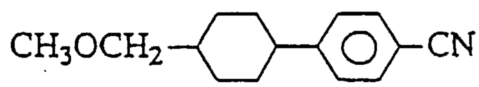 10%

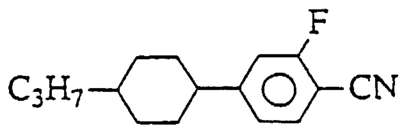 12%

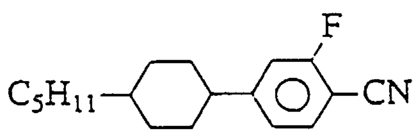 5%

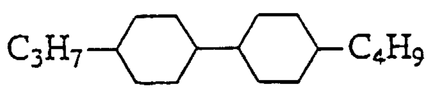 7%

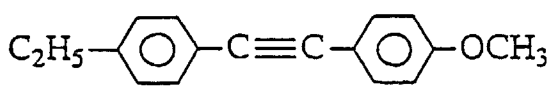 7%

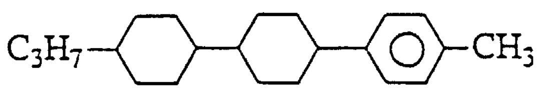 8%

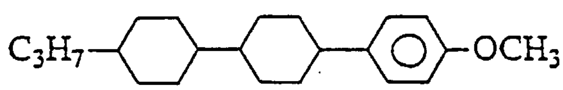 6%

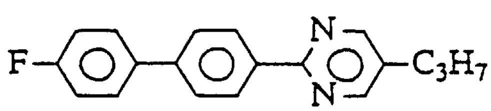 6%

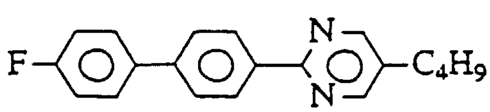 6%

This composition exhibited a clearing point of 97.6°C, a viscosity at 20°C of 24.4 mPa·s, an optical anisotropy at 25°C of 0.136, a dielectric anisotropy at 20°C of 12.4, a threshold voltage at 20°C of 1.34 V and a temperature-dependency of the threshold voltage of 0.27%/°C.

As compared with Comparative example 1, the threshold voltage lowered, and as compared with the composition of Comparative example 2, the viscosity lowered. Further, as compared with the two Comparative examples, the clearing point increased and the temperature-dependency of the threshold voltage decreased.

Example 4

A liquid crystal composition having the following composition was prepared:

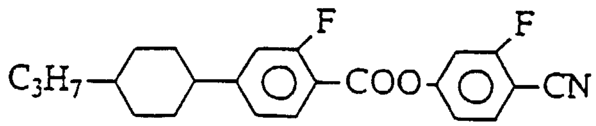

10%

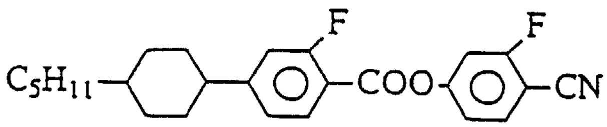

8%

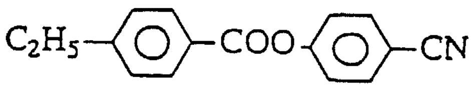

3%

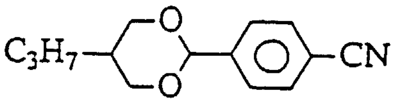

7%

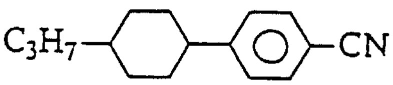

3%

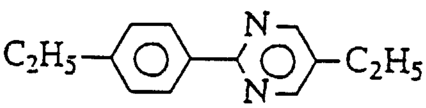

6%

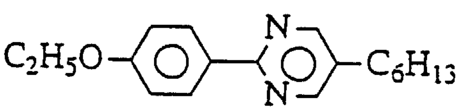

4%

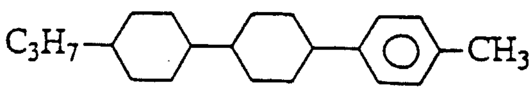

10%

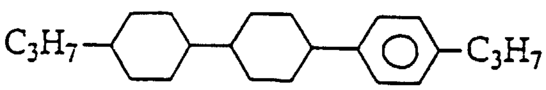

10%

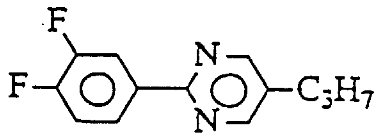
4%

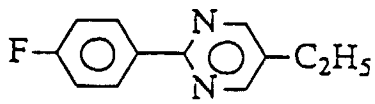
4%

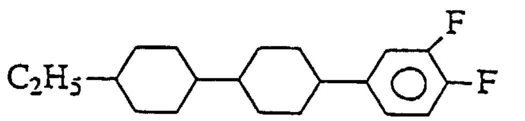
6%

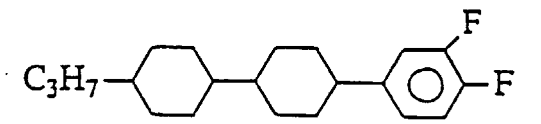
6%

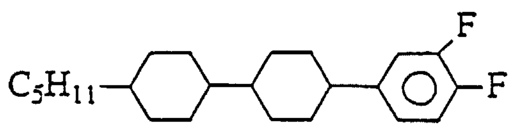
3%

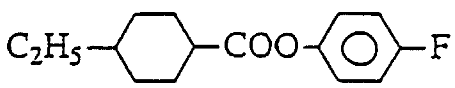
8%

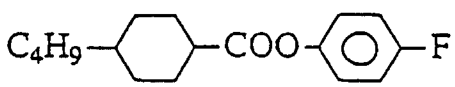
8%

This composition exhibited a clearing point of 70.7°C, a viscosity at 20°C of 26.0 mPa·s, an optical anisotropy at 25°C of 0.112, a dielectric anisotropy at 20°C of 12.3, a threshold voltage at 20°C of 1.25 V, and a temperature-dependency of the threshold voltage of 0.36%/°C.

As compared with Comparative exmaple 1, the threshold voltage lowered, and as compared with the composition of Comparative example 2, the viscosity lowered. Further, as compared with the two Comparative examples, the clearing point increased, and the temperature-dependency of the threshold voltage decreased.

Example 5

A liquid crystal composition having the following composition was prepared:

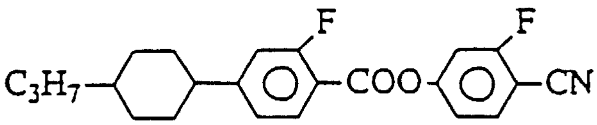

9%

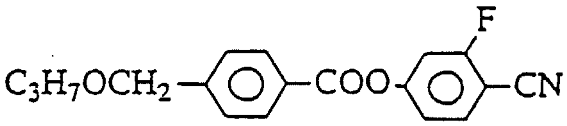

10%

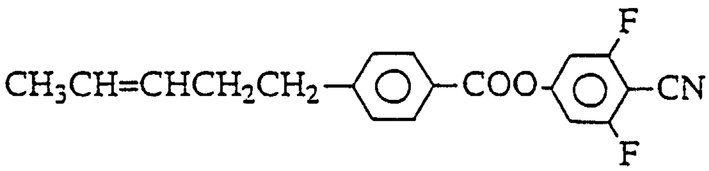

10%

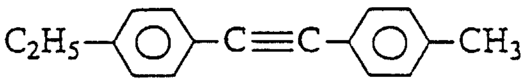

3%

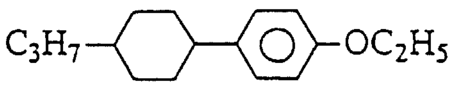

15%

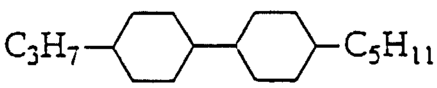

8%

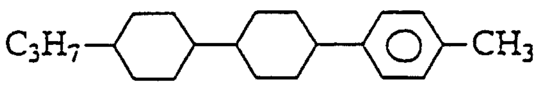

5%

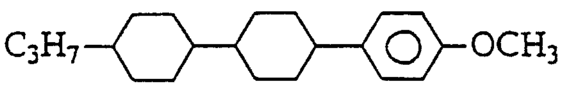

5%

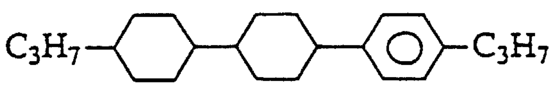

5%

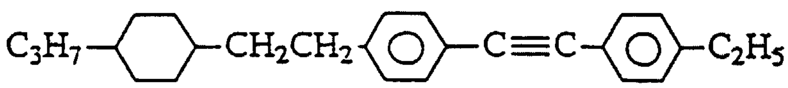

4%

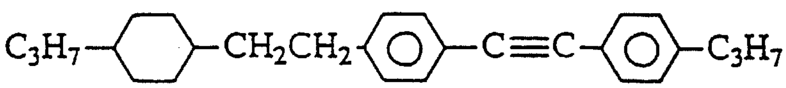

4%

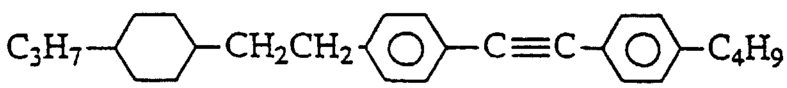

4%

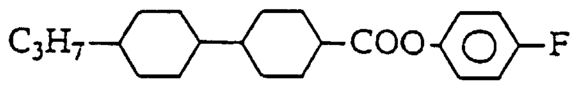 5%

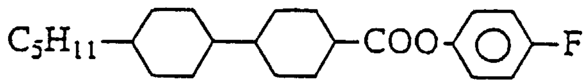 5%

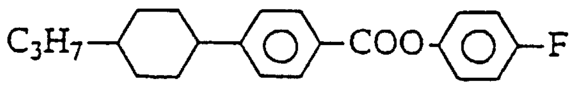 4%

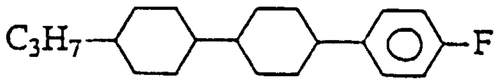 4%

This composition exhibited a clearing point of 102.5°C, a viscosity at 20°C of 26.7 mPa·s, an optical anisotropy at 25°C of 0.135, a dielectric anisotropy at 20°C of 16.8, a threshold voltage at 20°C of 1.42 V, and a temperature-dependency of the threshold voltage of 0.18%/°C.

<u>Example 6</u>

A liquid crystal composition having the following composition was prepared:

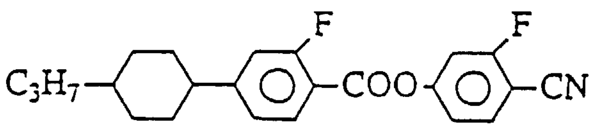 10%

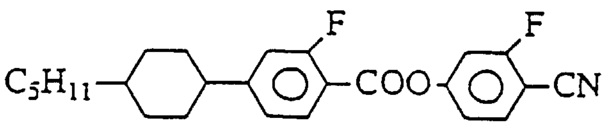 8%

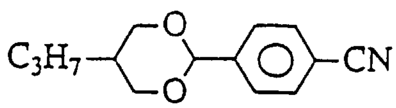 10%

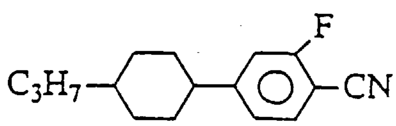 3%

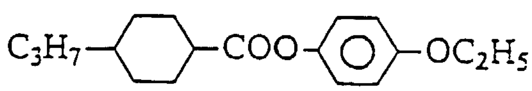 1.4%

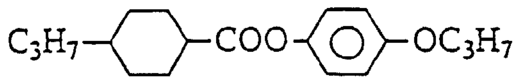

1.2%

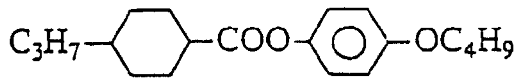

1.8%

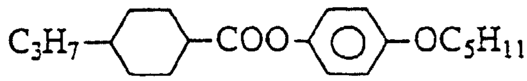

1.4%

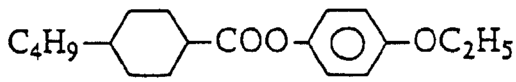

1.8%

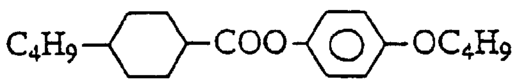

1.8%

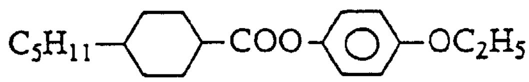

0.6%

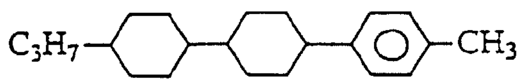

10%

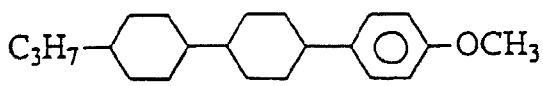

3%

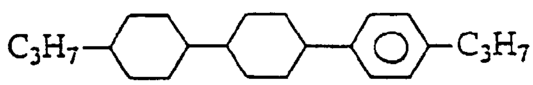

7%

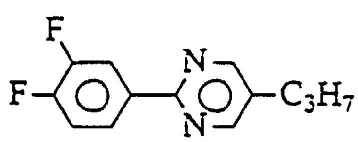

8%

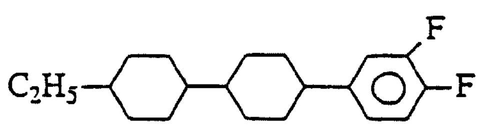

6%

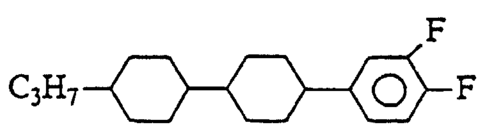

6%

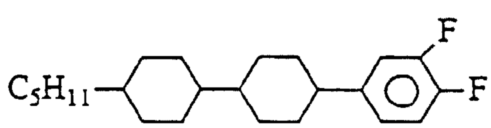

3%

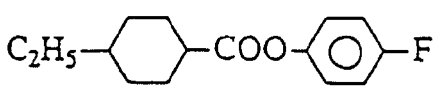

8%

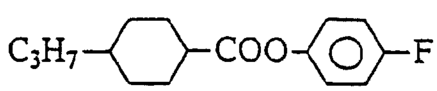

8%

this composition exhibited a clearing point of 76.2°C, a viscosity at 20°C of 28.4 mPa·s, an optical anisotropy at 25°C of 0.100, a dielectric anisotropy at 20°C of 11.4, a threshold voltage at 20°C of 1.26 V, and a temperature-dependency of the threshold voltage of 0.32%/°C.

Exmaple 7

A liquid crystal composition having the following composition was prepared:

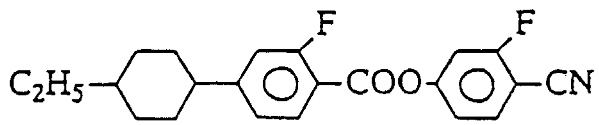 10%

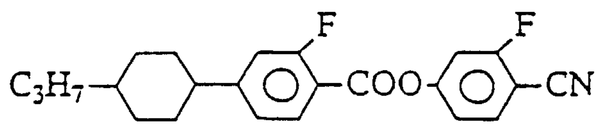 10%

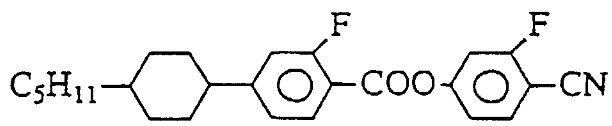 10%

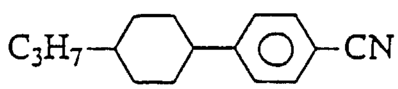 10%

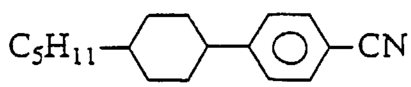 10%

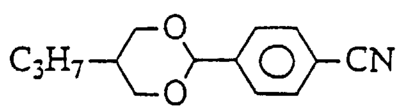 10%

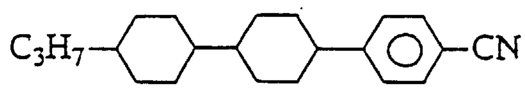 5%

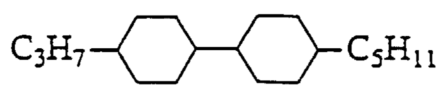 10%

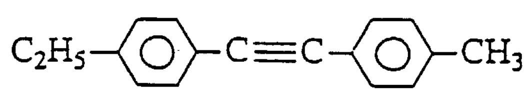 10%

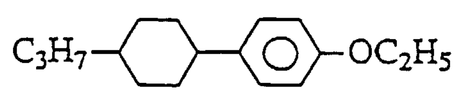 10%

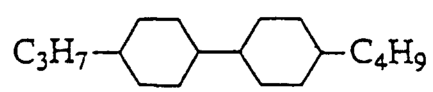 5%

This composition exhibited a clearing point of 78.2°C, a viscosity at 20°C of 28.8 mPa·s, an optical anisotropy at 25°C of 0.133, a dielectric anisotropy at 20°C of 15.8, a threshold voltage at 20°C of 1.26 V, and a temperature-dependency of the threshold voltage of 0.31%/°C .

Example 8

A liquid crystal composition having the following composition was prepared:

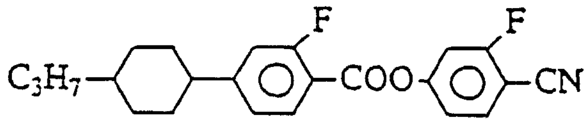
7%

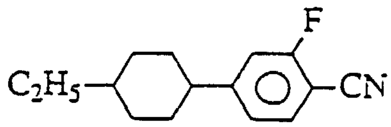
8%

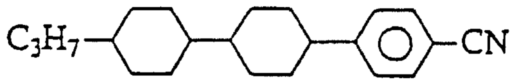
3%

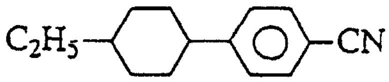
20%

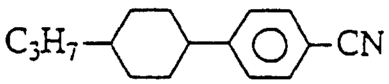
11%

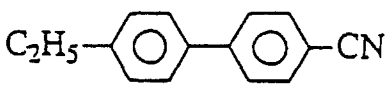
10%

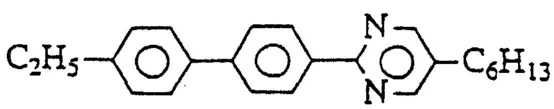
4%

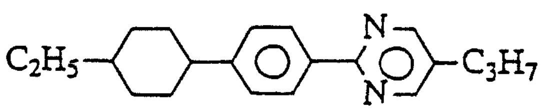
5%

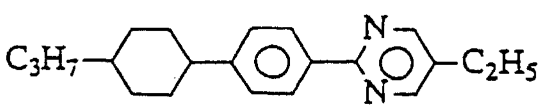
6%

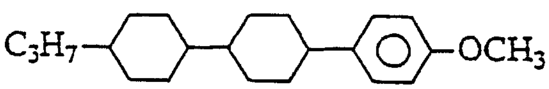
2%

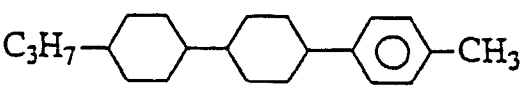
7%

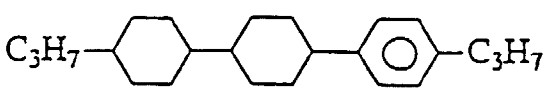
7%

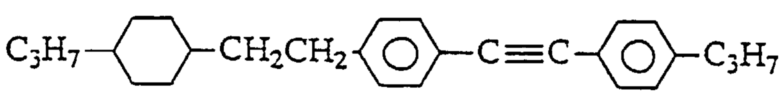
5%

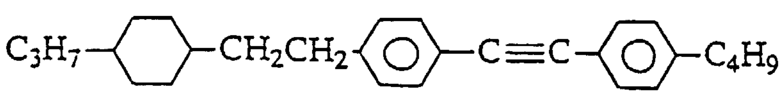
5%

This composition exhibited a clearing point of 88.4°C, a viscosity at 20°C of 27.3 mPa·s, an optical anisotropy at 25°C of 0.153, a dielectric anisotropy at 20°C of 11.8, a threshold voltage at 20°C of 1.47 V, and a temperature-dependency of the threshold voltage of 0.28%/°C.

Example 9

A liquid crystal composition having the following composition was prepared:

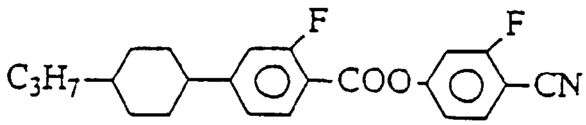

8%

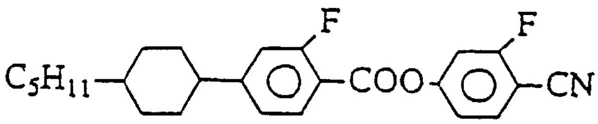

8%

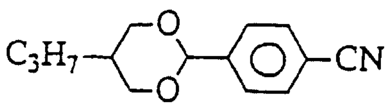

10%

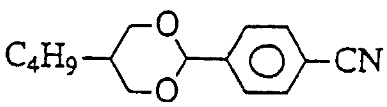

8%

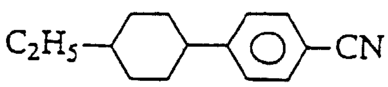

8%

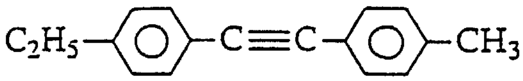

10%

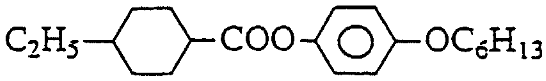

0.75%

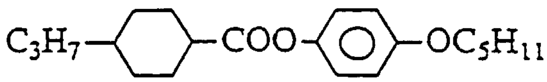

0.9%

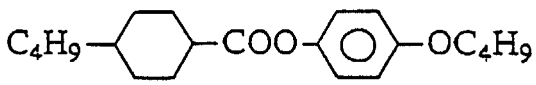

1.35%

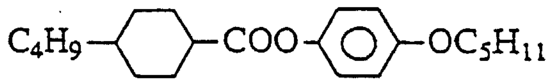

0.75%

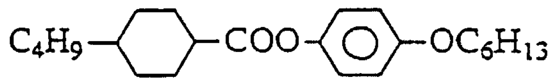

0.75%

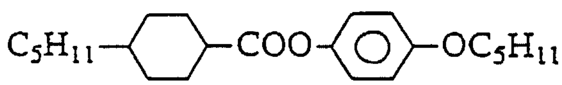

1.5%

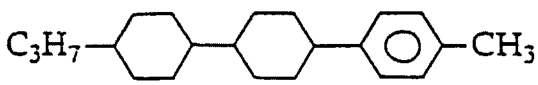

8%

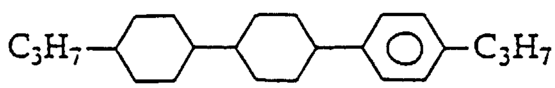

10%

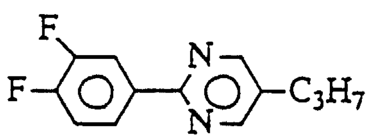

14%

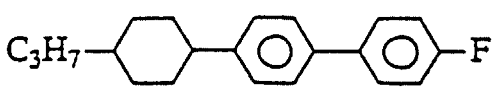

6%

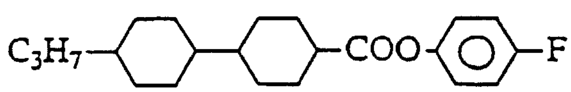

4%

This composition exhibited a clearing point of 66.0°C, a viscosity at 20°C of 27.4 mPa·s, an optical anisotropy at 25°C of 0.133, a dielectric anisotropy at 20°C of 13.7, a threshold voltage at 20°C of 1.20 V, and a temperature-dependency of the threshold voltage of 0.38%/°C.

<u>Example 10</u>

A liquid crystal composition having the following composition was prepared:

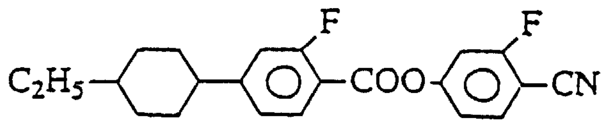 7%

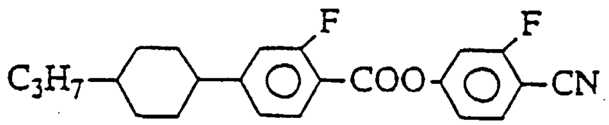 7%

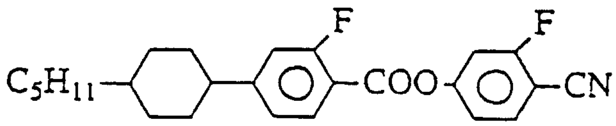 6%

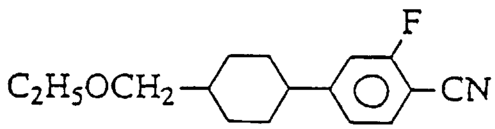 10%

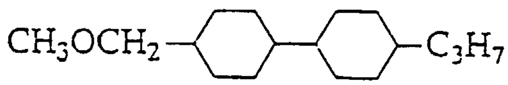 12%

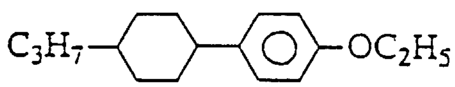 13%

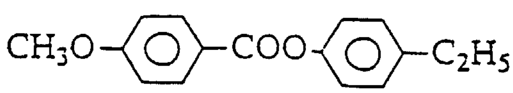 5%

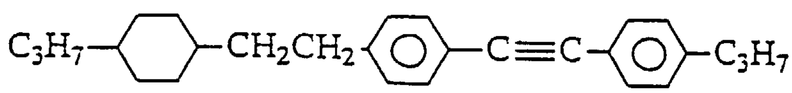 10%

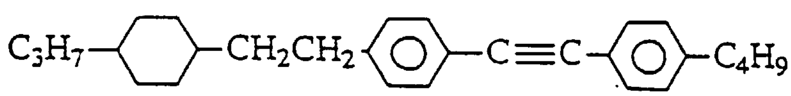 10%

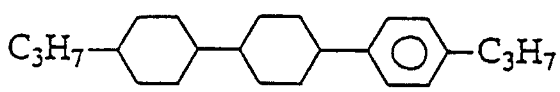 10%

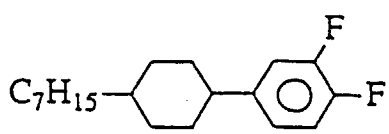 2%

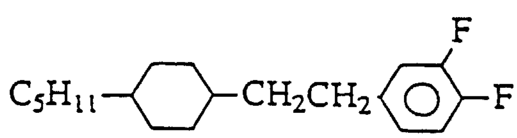 6%

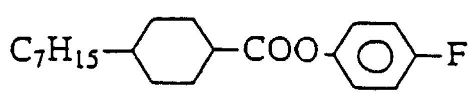 2%

This composition exhibited a clearing point of 84.4°C, a viscosity at 20°C of 29.4 mPa·s, an optical anisotropy at 25°C of 0.133, a dielectric anisotropy at 20°C of 13.3, a threshold voltage at 20°C of 1.43 V, and a temperature-dependency of the threshold voltage of 0.28%/°C.

Example 11

A liquid crystal composition having the following composition was prepared:

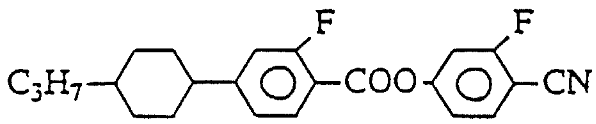 5%

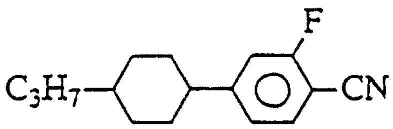 10%

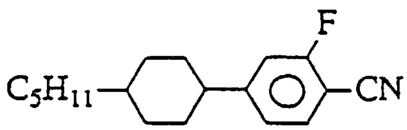 10%

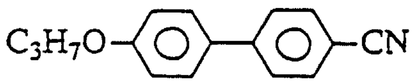 3%

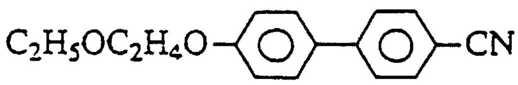 3%

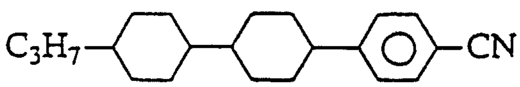 10%

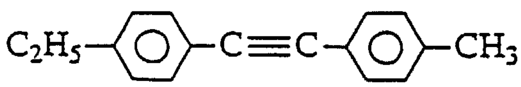 15%

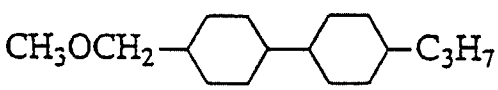 4%

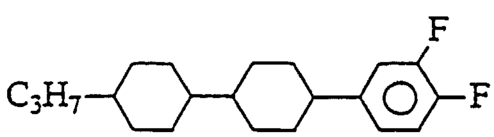 20%

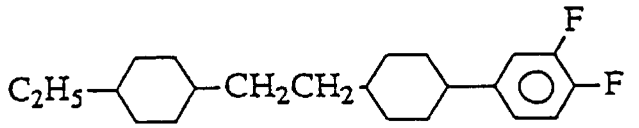

6.8%

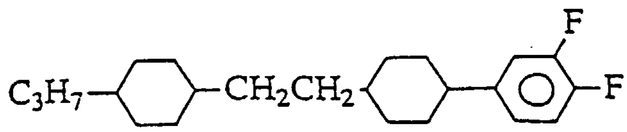

3.4%

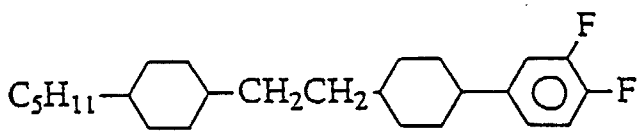

6.8%

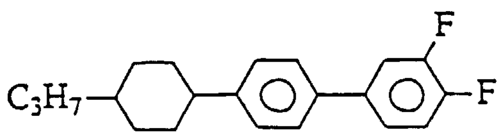

3%

This composition exhibited a clearing point of 80.0°C, a viscosity at 20°C of 24.5 mPa·s, an optical anisotropy at 25°C of 0.133, a dielectric anisotropy at 20°C of 10.1, a threshold voltage at 20°C of 1.50 V, and a temperature-dependency of the threshold voltage of 0.38%/°C.

Example 12

A liquid crystal composition having the following composition was prepared:

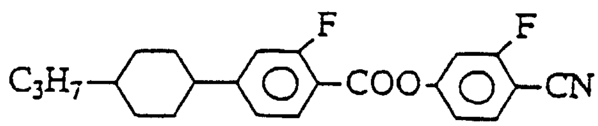

5%

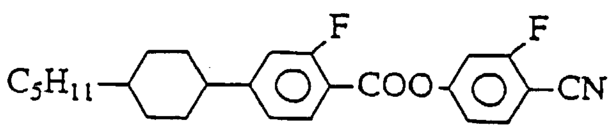

5%

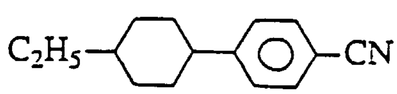

10%

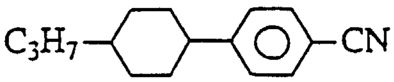

12%

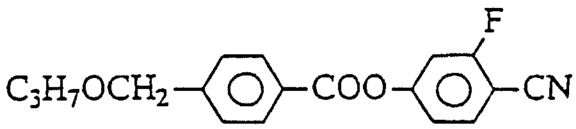

8%

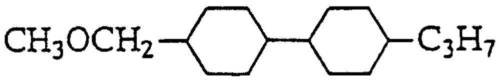

10%

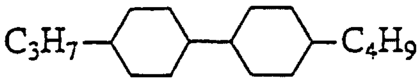

10%

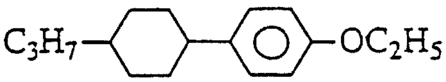

4%

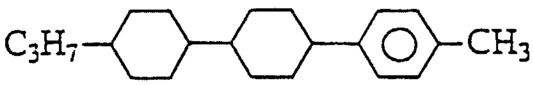

10%

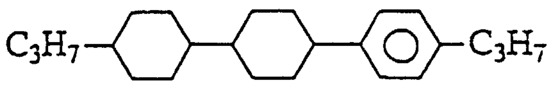

10%

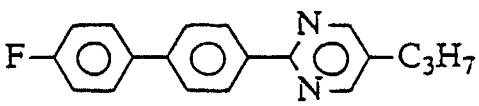

4%

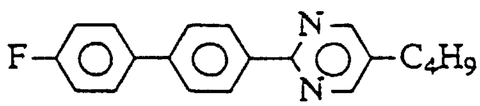

4%

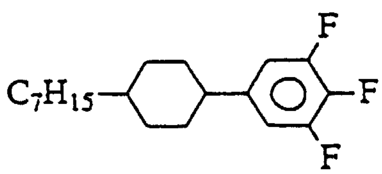

4%

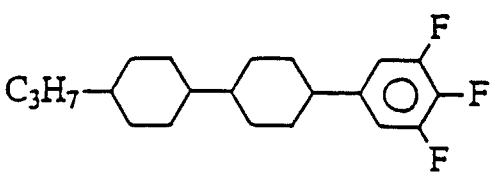

2%

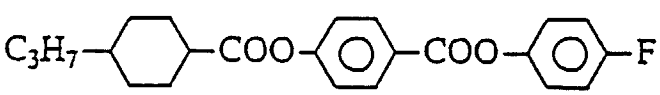

2%

This composition exhibited a clearing point of 77.3°C, a viscosity at 20°C of 21.7 mPa·s, an optical anisotropy at 25°C of 0.111, a dielectric anisotropy at 20°C of 11.0, a threshold voltage of 1.42 V, and a temperature-dependency of the threshold voltage of 0.30%/°C.

Example 13

A liquid crystal composition having the following composition was prepared:

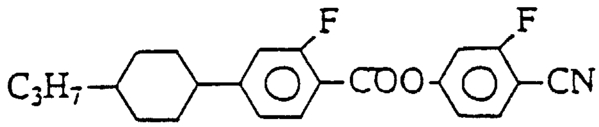 7%

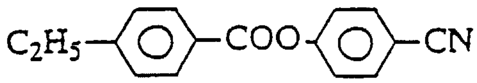 12%

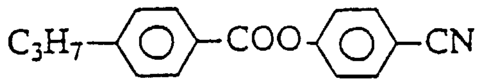 3%

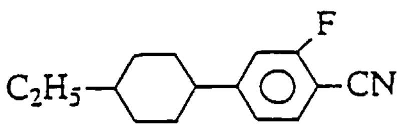 13%

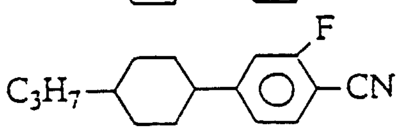 13%

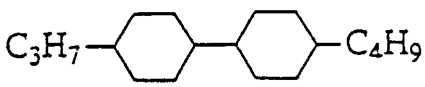 10%

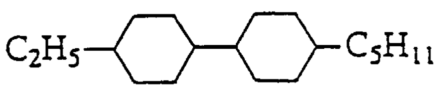 2%

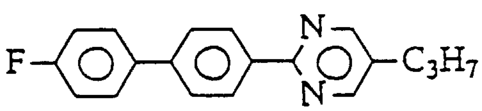 6%

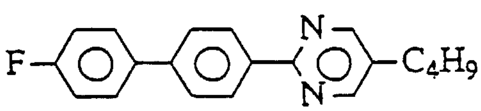 5%

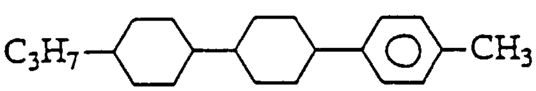 7%

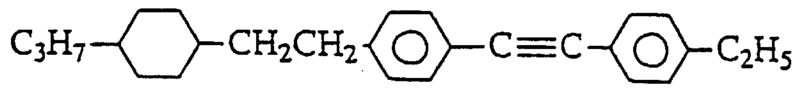 4%

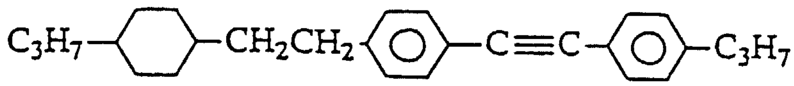 4%

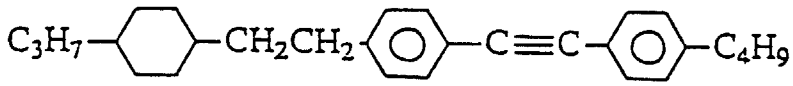 4%

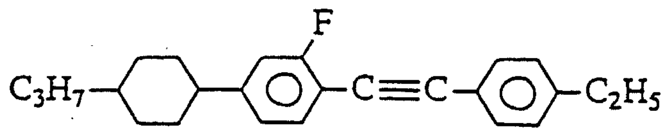 5%

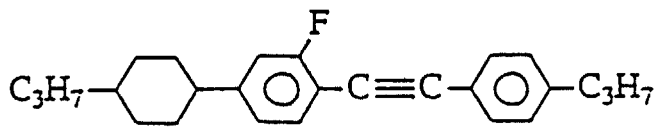 5%

This composition exhibited a clearing point of 85.3°C, a viscosity at 20°C of 30.0 mPa·s, an optical anisotropy at 25°C of 0.159, a dielectric anisotropy at 20°C of 10.5, a threshold voltage at 20°C of 1.32 V, and a temperature-dependency of the threshold voltage of 0.33%/°C.

Effectiveness of the Invention

As described in Examples, the present invention provides a liquid crystal composition satisfying various characteristics sought for STN display mode, and at the same time, having particularly, a low threshold voltage and a small temperature-dependency of the threshold voltage. This liquid crystal composition has a low viscosity and further a high clearing point. The liquid crystal display element using the liquid crystal composition satisfies a high speed property in the electrooptical response, and at the same time, can correspond to change in the environmental temperature.

## Claims

1. A liquid crystal composition comprising as a first component, at least one member selected from the group consisting of compounds expressed by the following formula (I):

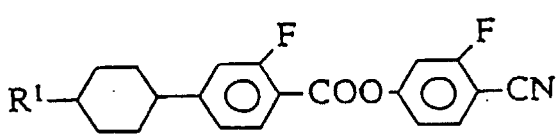 (I) ,

as a second component, at least one member selected from the group consisting of compounds expressed by the following formulas (II-a), (II-b), (II-c) or (II-d):

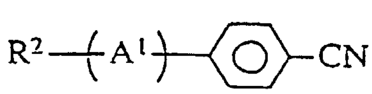 (II-a)

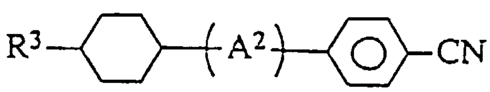 (II-b)

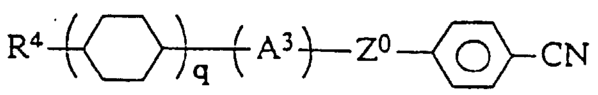

(II-c)

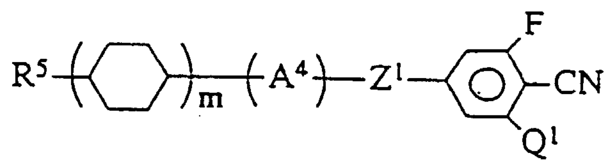

(II-d)

and as a third component, at least one member selected from the group consisting of compounds expressed by the following formulas (III) or (IV):

$$R^6\{B\}Z^2\{C\}R^7 \quad \text{(III)}$$

$$R^8\{D\}Z^3\{E\}Z^4\{G\}R^9 \quad \text{(IV)},$$

wherein, $R^1$, $R^2$, $R^3$, $R^4$, $R^5$ and $R^8$ each independently represent an alkyl group of 1 to 10 carbon atoms or alkenyl group of 2 to 10 carbon atoms; $R^6$ and $R^7$ each independently represent an alkyl group of 1 to 10 carbon atoms or an alkenyl group of 2 to 8 carbon atoms, and in either of these groups, an optional one or two not-adjacent methylene groups may be replaced by oxygen atom(s); $R^9$ represents an alkyl group, alkoxy group or alkoxymethyl group of 1 to 10 carbon atoms; $Z^0$ represents -COO- or $-CH_2CH_2-$; $Z^1$ represents $-CH_2CH_2-$, -COO- or a single bond; $Q^1$ represents H or F; $A^1$ represents trans-1,4-cyclohexylene, 1,4-phenylene or 1,3-dioxane-2,5-diyl; $A^2$, $A^3$, $A^4$, C and G each independently represent trans-1,4-cyclohexylene or 1,4-phenylene; q and m each independently represent 0 or 1; B represents trans-1,4-cyclohexylene, pyrimidine-2,5-diyl or 1,4-phenylene; $Z^2$ represents -C≡C-, -COO-, $-CH_2CH_2-$, -CH=CH-, -CF=CF- or single bond; D represents trans-1,4-cyclohexylene or pyrimidine-2,5-diyl; E represents trans-1,4-cyclohexylene or 1,4-phenylene whose one H at the lateral position may be replaced by F; $Z^3$ represents $-CH_2CH_2-$ or a single bond; and $Z^4$ represents -C≡C-, -COO-, -CH=CH- or a single bond.

2. A liquid crystal composition according to claim 1, wherein the mixing proportions of said first component, said second component and said third component are respectively 3 to 40%, 10 to 70% and 10 to 70%, based upon the total weight of said liquid crystal composition.

3. A liquid crystal composition according to said claim 1 or said claim 2, further comprising as a fourth component, at least one member selected from the group consisting of compounds expressed by the following formula (V) or formula (VI):

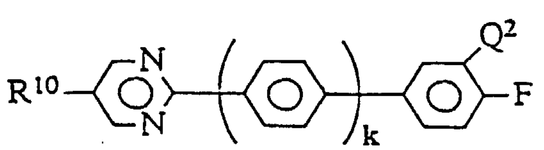

(V)

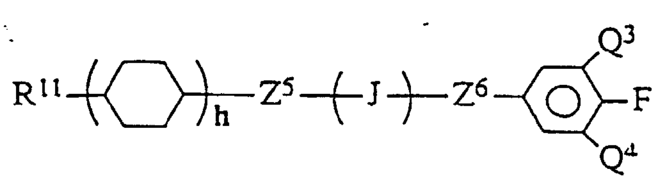

(VI)

wherein $R^{10}$ and $R^{11}$ each independently represent an alkyl group of 1 to 10 carbon atoms; $Q^2$, $Q^3$ and $Q^4$ each independently represent H or F; J represents trans-1,4-cyclohexylene or 1,4-phenylene; $Z^5$ and $Z^6$ each independend-

ently represent -COO- or a single bond; k represents 0 or 1; and h represents 0, 1 or 2.

**4.** A liquid crystal composition according to claim 3, wherein the mixing ratio of said fourth component is 0 to 50% based upon the total weight of said liquid crystal composition.

**5.** A liquid crystal composition according to either one of said claims 1 to 4, wherein $R^1$ represents an alkyl group of 1 to 10 carbon atoms in said formula (1).

**6.** A liquid crystal composition according to either one of said claims 1 to 5, wherein $R^6$ and $R^7$ each independently represent an alkyl group, an alkoxy group or an alkoxymethyl group each of 1 to 10 carbon atoms, in said formula (III).

**7.** A liquid crystal composition according to either one of said claims 1 to 6, wherein $R^8$ represents an alkyl group of 1 to 10 carbon atoms and $R^9$ represents an alkyl group or an alkoxy group of 1 to 10 carbon atoms, in said formula (IV) .

**8.** A liquid crystal display element characterized by using a liquid crystal composition according to either one of said claims 1 to 7.

**Patentansprüche**

**1.** Flüssigkristallzusammensetzung, die als erste Komponente wenigstens ein Element umfasst, das ausgewählt ist aus der Gruppe, die aus durch die folgende Formel (I) dargestellten Verbindungen besteht:

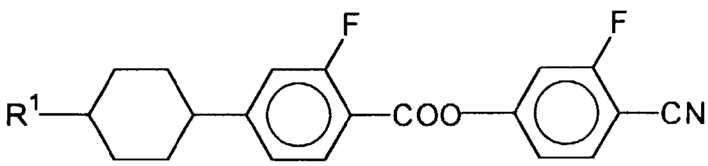

( I )

als zweite Komponente wenigstens ein Element, das ausgewählt ist aus der Gruppe, die aus durch die folgenden Formeln (II-a), (II-b), (II-c) oder (II-d) dargestellten Verbindungen besteht:

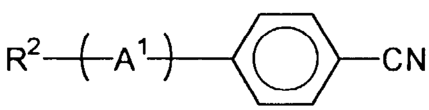

( II–a )

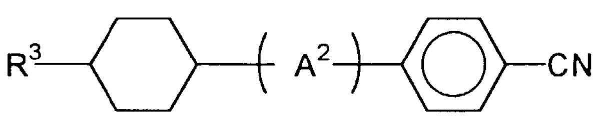

( II–b )

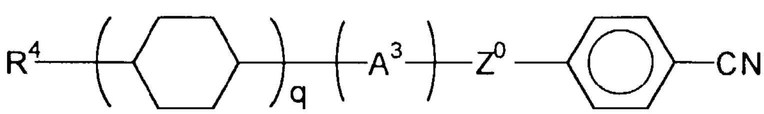

( II–c )

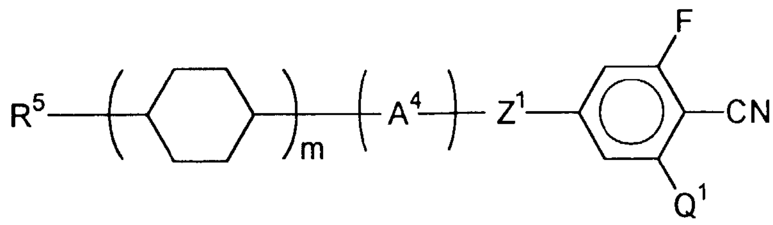

( II–d )

und als dritte Komponente wenigstens ein Element, das ausgewählt ist aus der Gruppe, die aus durch die folgenden Formeln (III) oder (IV) dargestellten Verbindungen besteht:

$$R^6\{B\}Z^2\{C\}R^7 \qquad \text{(III)}$$

$$R^8\{D\}Z^3\{E\}Z^4\{G\}R^9 \qquad \text{(IV)}$$

worin $R^1$, $R^2$, $R^3$, $R^4$, $R^5$ und $R^8$ jeweils unabhängig eine Alkylgruppe mit 1 bis 10 Kohlenstoffatomen oder eine Alkenylgruppe mit 2 bis 10 Kohlenstoffatomen darstellen; $R^6$ und $R^7$ jeweils unabhängig eine Alkylgruppe mit 1 bis 10 Kohlenstoffatomen oder eine Alkenylgruppe mit 2 bis 8 Kohlenstoffatomen darstellen und in jeder dieser Gruppen optionale ein oder zwei, nicht-benachbarte Methylengruppen durch (ein) Sauerstoffatom(e) ersetzt sein können; $R^9$ eine Alkylgruppe, Alkoxygruppe oder Alkoxymethylgruppe mit 1 bis 10 Kohlenstoffatomen darstellt; $Z^0$ -COO- oder $-CH_2CH_2-$ darstellt; $Z^1$ $-CH_2CH_2-$, -COO- oder eine Einfachbindung darstellt; $Q^1$ H oder F darstellt; $A^1$ trans-1,4-Cyclohexylen, 1,4-Phenylen oder 1,3-Dioxan-2,5-diyl darstellt; $A^2$, $A^3$, $A^4$, C und G jeweils unabhängig trans-1,4-Cyclohexylen oder 1,4-Phenylen darstellen; q und m jeweils unabhängig 0 oder 1 darstellen; B trans-1,4-Cyclohexylen, Pyrimidin-2,5-diyl oder 1,4-Phenylen darstellt; $Z^2$ -C≡C-, -COO-, $-CH_2CH_2-$, -CH=CH-, -CF=CF- oder eine Einfachbindung darstellt; D trans-1,4-cyclohexylen oder Pyrimidin-2,5-diyl darstellt; E trans-1,4-Cyclohexylen oder 1,4-Phenylen, dessen eines H in der seitlichen Position durch F ersetzt sein kann, darstellt; $Z^3$ $-CH_2CH_2-$ oder eine Einfachbindung darstellt; und $Z^4$ -C≡C-, -COO-, -CH=CH- oder eine Einfachbindung darstellt.

2. Flüssigkristallzusammensetzung gemäss Anspruch 1, worin die Mischungsverhältnisse der ersten Komponente, der zweiten Komponente und der dritten Komponente 3 bis 40 %, 10 bis 70 % bzw. 10 bis 70 % betragen, bezogen auf das Gesamtgewicht der Flüssigkristallzusammensetzung.

3. Flüssigkristallzusammensetzung gemäss Anspruch 1 oder 2, die zusätzlich als vierte Komponente wenigstens ein Element umfasst, das ausgewählt ist aus der Gruppe, die aus durch die folgende Formel (V) oder Formel (VI) dargestellten Verbindungen besteht:

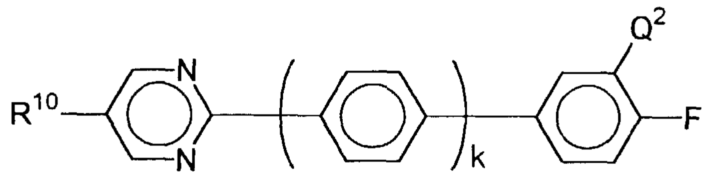

( V )

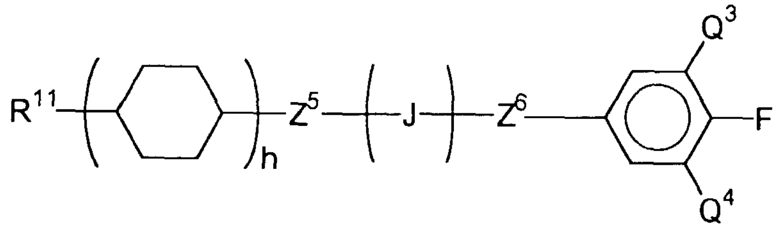

( VI )

worin $R^{10}$ und $R^{11}$ jeweils unabhängig eine Alkylgruppe mit 1 bis 10 Kohlenstoffatomen darstellen; $Q^2$, $Q^3$ und $Q^4$ jeweils unabhängig H oder F darstellen; J trans-1,4-cyclohexylen oder 1,4-Phenylen darstellen; $Z^5$ und $Z^6$ jeweils unabhängig -COO- oder eine Einfachbindung darstellen; k 0 oder 1 darstellt; und h 0, 1 oder 2 darstellt.

4. Flüssigkristallzusammensetzung gemäss Anspruch 3, worin das Mischungsverhältnis der vierten Komponente 0 bis 50 % beträgt, bezogen auf das Gesamtgewicht der Flüssigkristallzusammensetzung.

5. Flüssigkristallzusammensetzung gemäss einem der Ansprüche 1 bis 4, worin $R^1$ in Formel (I) eine Alkylgruppe mit 1 bis 10 Kohlenstoffatomen darstellt.

6. Flüssigkristallzusammensetzung gemäss einem der Ansprüche 1 bis 5, worin $R^6$ und $R^7$ in Formel (III) jeweils unabhängig eine Alkylgruppe, eine Alkoxygruppe oder eine Alkoxymethylgruppe mit jeweils 1 bis 10 Kohlenstoffatomen darstellen.

7. Flüssigkristallzusammensetzung gemäss einem der Ansprüche 1 bis 6, worin $R^8$ in Formel (IV) eine Alkylgruppe mit 1 bis 10 Kohlenstoffatomen darstellt und $R^9$ eine Alkylgruppe oder eine Alkoxygruppe mit 1 bis 10 Kohlenstoffatomen darstellt.

8. Flüssigkristall-Anzeigeelement, dadurch gekennzeichnet, dass es eine Flüssigkristallzusammensetzung gemäss einem der Ansprüche 1 bis 7 verwendet.

**Revendications**

1. Composition de cristaux liquides comprenant comme premier composant, au moins un élément choisi dans le groupe constitué par les composés représentés par la formule suivante (I) :

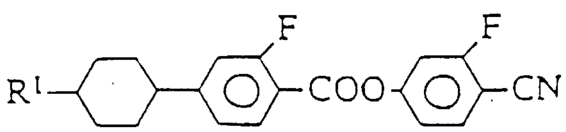

( I ) ,

comme second composant, au moins un élément choisi dans le groupe constitué par les composés représentés par les formules suivantes (II-a), (II-b), (II-c) ou (II-d) :

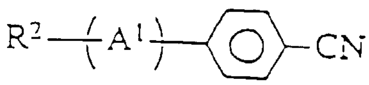

( II - a )

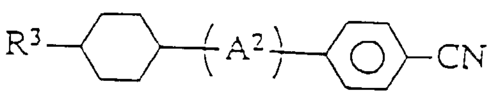

( II - b )

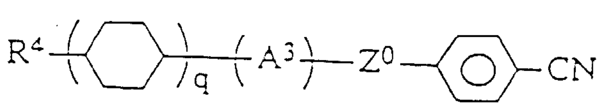

( II - c )

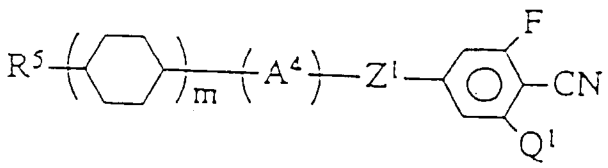

(II-d)

comme troisième composant, au moins un élément choisi dans le groupe constitué par les composés représentés par les formules suivantes (III) ou (IV) :

$$R^6\{B\}Z^2\{C\}R^7 \qquad \text{(III)}$$

$$R^8\{D\}Z^3\{E\}Z^4\{G\}R^9 \qquad \text{(IV),}$$

où $R^1$, $R^2$, $R^3$, $R^4$, $R^5$ et $R^8$ représentent chacun de manière indépendante un groupe alkyle de 1 à 10 atomes de carbone ou un groupe alcényle de 2 à 10 atomes de carbone; $R^6$ et $R^7$ représentent chacun d'une manière indépendante un groupe alkyle de 1 à 10 atomes de carbone ou un groupe alcényle de 2 à 8 atomes de carbone, et un ou deux groupes méthylène non adjacents éventuels dans l'un ou l'autre de ces groupes pouvant être remplacés par un ou des atomes d'oxygène; $R^9$ représente un groupe alkyle, un groupe alcoxy ou un groupe alcoxyméthyle de 1 à 10 atomes de carbone; $Z^0$ représente -COO- ou $-CH_2CH_2-$; $Z^1$ représente $-CH_2CH_2-$, -COO- ou une liaison simple; $Q^1$ représente H ou F; $A^1$ représente le trans-1,4-cyclohexylène, le 1,4-phénylène ou le 1,3-dioxane-2,5-diyle; $A^2$, $A^3$, $A^4$, C et G représentent chacun d'une manière indépendante le trans-1,4-cyclohexylène ou le 1,4-phénylène; q et m sont chacun de manière indépendante 0 ou 1; B représente le trans-1,4-cyclohexylène, le pyrimidine-2,5-diyle ou le 1,4-phénylène; $Z^2$ représente -C≡C-,-COO-,$-CH_2CH_2-$,-CH=CH-, -CF=CF- ou une liaison simple; D représente le trans-1,4-cyclohexylène ou le pyrimidine-2,5-diyle; E représente le trans-1,4-cyclohexylène ou le 1,4-phénylène dont un H en position latérale peut être remplacé par F; $Z^3$ représente $-CH_2CH_2-$ ou une liaison simple; et $Z^4$ représente -C≡C-, -COO-, -CH=CH- ou une liaison simple.

**2.** Composition de cristaux liquides selon la revendication 1, dans laquelle les proportions de mélange dudit premier composant, dudit second composant et dudit troisième composant correspondent respectivement à 3 - 40 %, 10 - 70 % et de 10 - 70 %, sur la base du poids total de ladite composition de cristaux liquides.

**3.** Composition de cristaux liquides selon la revendication 1 ou la revendication 2, comprenant en outre, en tant que quatrième composant, au moins un composant choisi dans le groupe constitué par les composants représentés par les formules suivantes (V) ou (VI) :

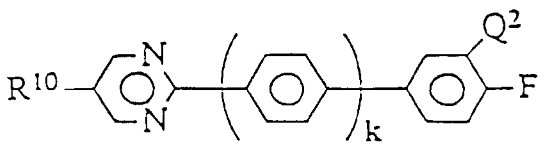

(V)

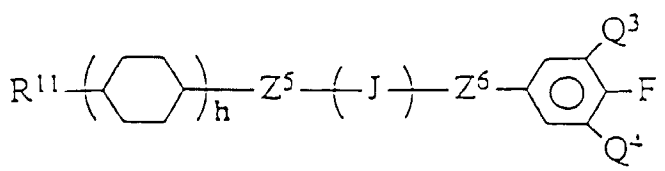

(VI)

dans lesquelles $R^{10}$ et $R^{11}$ représentent chacun de manière indépendante, un groupe alkyle ayant de 1 à 10 atomes de carbone; $Q^2$, $Q^3$ et $Q^4$ représentent chacun de manière indépendante H ou F; J représente le trans-1,4-cyclohexylène ou le 1,4-phénylène; $Z^5$ et $Z^6$ représentent chacun indépendamment -COO- ou une liaison simple; k

représente 0 ou 1; et h représente 0, 1 ou 2.

4. Composition de cristaux liquides selon la revendication 3, dans laquelle la proportion de mélange dudit quatrième composant est de 0 à 50 % sur la base du poids total de ladite composition de cristaux liquides.

5. Composition de cristaux liquides selon l'une des revendications 1 à 4, où $R^1$ représente un groupe alkyle de 1 à 10 atomes de carbone dans ladite formule (I).

6. Composition de cristaux liquides selon l'une quelconque des revendications 1 à 5, où $R^6$ et $R^7$ représentent chacun de manière indépendante un groupe alkyle, un groupe alcoxy ou un groupe alcoxyméthyle ayant chacun 1 à 10 atomes de carbone dans ladite formule (III).

7. Composition de cristaux liquides selon l'une quelconque des revendications 1 à 6, où $R^8$ représente un groupe alkyle ayant de 1 à 10 atomes de carbone et $R^9$ représente un groupe alkyle ou alcoxy ayant de 1 à 10 atomes de carbone, dans ladite formule (IV).

8. Elément d'affichage à cristaux liquides caractérisé par l'utilisation d'une composition de cristaux liquides selon l'une quelconque des revendications 1 à 7.